# EUROPÄISCHE PATENTSCHRIFT

(11) **EP 3 008 012 B1**
(45) Veröffentlichungstag und Bekanntmachung des Hinweises auf die Patenterteilung: **16.03.2022**
(21) Anmeldenummer: 14729917.6
(22) Anmeldetag: 13.06.2014
(51) Int. Cl.: C01B 3/06

(54) **VORRICHTUNG SOWIE VERFAHREN ZUR HYDOLYTISCHEN ERZEUGUNG VON WASSERSTOFF SOWIE VORRICHTUNG ZUR ERZEUGUNG VON ELEKTRISCHER ENERGIE UND VERWENDUNGSMÖGLICHKEITEN**
DEVICE AND METHOD FOR THE HYDROLYTIC PRODUCTION OF HYDROGEN, DEVICE FOR PRODUCING ELECTRICAL ENERGY AND POSSIBILITIES FOR USAGE
DISPOSITIF ET PROCÉDÉ DE PRODUCTION HYDROLYTIQUE D'HYDROGÈNE ET DISPOSITIF DE PRODUCTION D'ÉNERGIE ÉLECTRIQUE ET POSSIBILITÉS D'UTILISATION ASSOCIÉES

(30) Priorität: 14.06.2013 DE 102013211106
(43) Veröffentlichungstag der Anmeldung: 20.04.2016
(73) Patentinhaber: Fraunhofer Gesellschaft zur Förderung der angewandten Forschung e.V., 80636 München (DE)
(72) Erfinder: TEGEL, Marcus, 01277 Dresden (DE); RÖNTZSCH, Lars, 01309 Dresden (DE); KIEBACK, Bernd, 01728 Possendorf (DE)
(74) Vertreter: Pfenning, Meinig & Partner mbB
(86) Internationale Anmeldenummer: PCT/EP2014/062469
(87) Internationale Veröffentlichungsnummer: WO 2014/198948

(56) Entgegenhaltungen:
- US-A1- 2006 127 273
- GROSJEAN M H ET AL: "Hydrolysis of Mg-salt and MgH2-salt mixtures prepared by ball milling for hydrogen production", JOURNAL OF ALLOYS AND COMPOUNDS, ELSEVIER SEQUOIA, LAUSANNE, CH, Bd. 416, Nr. 1-2, 8. Juni 2006 (2006-06-08), Seiten 296-302, XP027999388, ISSN: 0925-8388, DOI: 10.1016/J.JALLCOM.2005.09.008 [gefunden am 2006-06-08]
- FAN M Q ET AL: "Hydrolysis of ball milling Al-Bi-hydride and Al-Bi-salt mixture for hydrogen generation", JOURNAL OF ALLOYS AND COMPOUNDS, ELSEVIER SEQUOIA, LAUSANNE, CH, Bd. 460, Nr. 1-2, 28. Juli 2008 (2008-07-28), Seiten 125-129, XP022702305, ISSN: 0925-8388, DOI: 10.1016/J.JALLCOM.2007.05.077 [gefunden am 2008-06-03]
- GROSJEAN M H ET AL: "Hydrogen production via hydrolysis reaction from ball-milled Mg-based materials", INTERNATIONAL JOURNAL OF HYDROGEN ENERGY, ELSEVIER SCIENCE PUBLISHERS B.V., BARKING, GB, Bd. 31, Nr. 1, 1. Januar 2006 (2006-01-01) , Seiten 109-119, XP024899784, ISSN: 0360-3199, DOI: 10.1016/J.IJHYDENE.2005.01.001 [gefunden am 2006-01-01]
- SHUANG WANG ET AL: "Hydrolysis reaction of ball-milled Mg-metal chlorides composite for hydrogen generation for fuel cells", INTERNATIONAL JOURNAL OF HYDROGEN ENERGY, ELSEVIER SCIENCE PUBLISHERS B.V., BARKING, GB, Bd. 37, Nr. 8, 23. Januar 2012 (2012-01-23), Seiten 6771-6775, XP028477493, ISSN: 0360-3199, DOI: 10.1016/J.IJHYDENE.2012.01.099 [gefunden am 2012-01-25]

## Beschreibung

Kompakte und leichte Einwegspeicher zur Erzeugung elektrischer Energie mit extrem hohen Energiedichten (> 1 kWh/kg und > 1 kWh/Liter) sind für viele Anwendungsfelder von immensem Interesse. Eine Möglichkeit, solche Energiespeicher zu realisieren, besteht in der Verwendung von Metallhydriden in Wasserstoffgeneratoren, bei denen durch eine hydrolytische Abspaltung eines Protons von Wasser in Verbindung mit dem Metallhydrid Wasserstoff generiert wird. Die im Wasserstoff gespeicherte chemische Energie kann dann in einem zweiten Schritt in einer Brennstoffzelle in elektrische Energie umgewandelt werden. Bei der Hydrolysereaktion stammt nur die Hälfte des erzeugten Wasserstoffs aus dem Metallhydrid - das zur Hydrolyse verwendete Wasser liefert die andere Hälfte.

Da Wasser unterschiedlicher Zusammensetzung auf der Erde nahezu ubiquitär vorkommt, kann die Wasserstofferzeugung durch Hydrolyse auch mit lokal vorhandenem, ionenhaltigem Wasser erfolgen. Auf diese Weise muss nur noch die Vorrichtung zur hydrolytischen Erzeugung des Wasserstoffs mit Speichermaterial, nicht aber das zur Hydrolyse verwendete Wasser zum Ort der Energieerzeugung transportiert werden, was zu einer drastischen Erhöhung der Nutzenergiedichte solcher Speichersysteme führt.

Bestehende Speichermaterialien in Vorrichtungen zur hydrolytischen Erzeugung von Wasserstoff haben jedoch gravierende Nachteile: Sie sind entweder toxisch (z.B. NaBH₄- wobei nicht nur NaBH₄ selbst, sondern auch die verwendeten Katalysatoren oft toxisch sind), zu schwer (z.B. CaH₂), zu teuer (H-Mg₃*RE*; *RE*=Lanthanide La-Lu), zu reaktiv und damit nicht gefahrlos und einfach handhabbar (beispielsweise alle Alkalimetallhydride) - oder im Falle von MgH₂, was prinzipiell alle sonstigen Anforderungen an ein solches Speichermaterial erfüllt - zu unreaktiv. Das Hauptproblem bei der Verwendung von MgH₂, aber auch von anderen hydrierten magnesiumhaltigen Legierungen in Vorrichtungen zur hydrolytischen Wasserstofferzeugung liegt in der Bildung einer passivierenden oberflächlichen Schicht von Mg(OH)₂ bei Kontakt des Hydrids mit Wasser, wodurch die Hydrolysereaktion bereits nach sehr kurzer Reaktionsdauer nahezu vollständig zum Erliegen kommt.

Weiterhin ist insbesondere bei der Hydrolyse von Magnesiumhydrid problematisch, dass bei der Verwendung von nicht entmineralisiertem Wasser Ionen oder Substanzen im Wasser vorhanden sein können, die die Hydrolysereaktion durch eine zusätzliche Ausbildung passivierender Schichten spezifischer schwerlöslicher Salze weiter behindern. In eigenen Untersuchungen konnte beispielsweise gezeigt werden, dass die Hydrolyse von Magnesiumhydrid in Anwesenheit von Phosphat- oder Carbonationen inhibiert sein kann. Dies gilt gleichermaßen für das Vorhandensein bestimmter Chelatkomplexbildner wie beispielsweise Na₂EDTA.

Ein drittes Problem stellt die unzureichende Handhabbarkeit der Materialien in Vorrichtungen zur hydrolytischen Erzeugung von Wasserstoff dar. Zum einen haben Pulver von Metallhydriden eine verminderte volumetrische Energiedichte (im Vergleich zur maximal möglichen materialspezifischen Energiedichte bei 100% Raumfüllung), zum anderen lassen sich Pulver vergleichsweise schwer dosieren.

Außerdem können Metallhydridpulver in hydrolytischen Wasserstoffgeneratoren nur unter erschwerten Bedingungen gelagert werden - beispielsweise, da sie im Laufe der Zeit durch (auch geringe) Luftfeuchtigkeit hydrolysieren. Ein weiteres Problem ist, dass die Hydrolysereaktion sofort startet, sobald das Metallhydrid mit Wasser in Berührung kommt. Für ein besser handhabbares System wäre jedoch eine materialseitige Anlaufverzögerung für die Hydrolysereaktion von großem Vorteil, damit der Wasserstoffgenerator nach Materialzugabe sicher verschlossen werden kann, bevor die eigentliche Hydrolyse anläuft.

Stand der Technik ist die Verwendung nanokristalliner Metallhydride (WO 01/68517) zur hydrolytischen Wasserstofferzeugung, wo durch einen hohen Energieeintrag die Reaktivität des Hydrids soweit gesteigert wurde, dass im Vergleich zu polykristallinem Metallhydrid eine erhöhte Reaktionskinetik zu verzeichnen ist. Für MgH₂ ist in WO 01/68517 beispielsweise ein Reaktionsumsatz von 80 % nach 20 Stunden Hydrolysedauer angegeben. Nachteilig dabei ist jedoch die sehr lange Mahldauer (20 Stunden) und der damit für die Mahlung erforderliche Energieeintrag zur Herstellung des Speichermaterials. Außerdem ist die Reaktionskinetik mit einem Umsatz von 80 % nach 20 Stunden immer noch für die Realisierung einer durch Portionierung des Feststoffs steuerbaren Hydrolyse unzureichend. In eigenen Untersuchungen wurde außerdem festgestellt, dass eine Alterung der metastabilen, durch Mahlungen erzeugten nanokristallinen Hydride bei Lagerung über mehrere Wochen (selbst bei Raumtemperatur unter Argon mit H₂O < 1 ppm, O₂ < 1 ppm) auftritt, was zu einer signifikanten Reduktion der nutzbaren Speicherdichte des Hydrids führt.

Weiterhin ist bekannt, dass bestimmte wässrige Lösungen mancher Halogenide eine schnellere Hydrolyse von MgH₂ begünstigen (z.B. CN102491265). Ein gravierender Nachteil dabei ist jedoch, dass eine solche Lösung erst vor Ort erzeugt werden müsste, und da diese Salze zudem in entsprechend hoher Konzentration (z.B. 1 Mol/Liter) eingesetzt werden und zusammen mit dem Energiespeichermaterial transportiert werden müssten, sinkt die Nutzspeicherdichte entsprechender Gesamtsysteme beträchtlich.

Genauso ungünstig sieht die Situation bei der Verwendung von Brønsted-Säuren oder Puffern als Mg(OH)₂-lnhibitoren aus (z.B. DOI 10.1016/j.ijhydene.2012.06.012). Um die Bildung von passivierendem Mg(OH)₂ zu verhindern, müssten zu 1 g MgH₂ rechnerisch beispielsweise 4,9 g Zitronensäure zugesetzt werden, was einer Reduktion der gravimetrischen Speicherdichte des Gesamtsystems von 83 % entspricht. Dieses generelle Missverhältnis zwischen Speichermaterial und Magnesiumhydroxid-Inhibitor ist in ähnlicher Größenordnung auch bei allen anderen Brønsted-Säuren und auch bei Puffern gegeben und konnte in vielen Experimenten bestätigt werden.

Als Möglichkeit zur Katalyse der Hydrolysereaktion gemäß Stand der Technik besteht der Zusatz teurer edelmetallhaltiger Katalysatoren (z.B. Pt-LiCoO₂, DOI 10.1023/B:JMSC.0000017794.92899.bd), wobei neben den reinen Materialkosten auch noch große Mengen an Katalysator (bis zu 50 Gew.-%) benötigt werden; bekannt ist ferner der Einsatz bestimmter nanokristalliner Magnesiumhydrid-Metalloxid-Komposite (z.B. CN102060266), wobei die für WO 01 68517 genannten Problematiken nanokristalliner Materialien im Wesentlichen auch bestehen.

M.-H. Grosjean et al. beschreiben in Journal of Alloys und Compounds 416, 2006, 296 - 302, die Hydrolyse von Magnesiumsalzen und MgH₂-Salzmischungen, die mittels eines Mahlverfahrens hergestellt wurden für die Wasserstoffproduktion.

Ebenso beschreiben M.-Q. Fan et al. in Journal of Alloys and Compounds 460 (2008), 125 - 129, die Hydrolyse von gemahlenem Al-Bi-Hydrid und Al-Bi-Salzmischungen für die Wasserstoffgeneration.

Aus der US 2006/0127273 A1 ist eine Vorrichtung sowie ein Verfahren zur Herstellung von Chlordioxidgas bekannt.

Eine Lösung der Inhibitionsproblematik der Hydrolyse durch bei in realem Wasser vorkommende Ionen wie beispielsweise Phosphat oder Carbonat für magnesiumhaltige Hydride ist genauso wenig bekannt wie eine Lösung der unzureichenden Handhabbarkeit der für die Hydrolyse verwendeten Materialien unter Anwendungsbedingungen (Lagerfähigkeit, Dosierbarkeit, Anlaufverzögerung).

Ausgehend hiervon war es Aufgabe der vorliegenden Erfindung, eine Vorrichtung bereitzustellen, die die hydrolytische Erzeugung von Wasserstoff ermöglicht. Ein Hauptmerkmal dieser Vorrichtung besteht in dem darin zum Einsatz kommenden Kompositmaterial, welches die zuvor genannten Problematiken löst. Die Vorrichtung zur Erzeugung von Wasserstoff soll sich außerdem insbesondere in eine Vorrichtung zur Erzeugung elektrischer Energie integrieren lassen. Weiterhin soll gemäß der vorliegenden Erfindung ein Verfahren zur Erzeugung von Wasserstoff sowie Verwendungsmöglichkeiten der Vorrichtungen angegeben werden.

Diese Aufgabe wird bezüglich einer Vorrichtung zur Erzeugung von Wasserstoff mit den Merkmalen des Patentanspruchs 1, bezüglich eines Verfahrens zur Erzeugung von Wasserstoff mit den Merkmalen des Anspruchs 11, bezüglich einer Vorrichtung zur Erzeugung elektrischer Energie mit den Merkmalen des Patentanspruchs 13 sowie Verwendungsmöglichkeiten mit den Merkmalen des Patentanspruchs 14 gelöst. Die jeweiligen abhängigen Patentansprüche stellen dabei vorteilhafte Weiterbildungen dar.

Die Erfindung betrifft somit eine Vorrichtung zur hydrolytischen Erzeugung von Wasserstoff, umfassend mindestens ein Kompositmaterial, dadurch gekennzeichnet dass dieses mindestens eine Kompositmaterial der Vorrichtung MgH₂ umfasst sowie mindestens ein Additiv, ausgewählt aus der Gruppe bestehend aus wasserlöslichen und/oder unter Säurebildung hydrolysierbaren Metallsalzen, welches eines oder mehrere der Metallkationen, Ca²⁺, Mg²⁺, Zn²⁺, Sn²⁺, Fe²⁺, Fe³⁺, Ti³⁺, Ga³⁺, Sc³⁺, Al³⁺, Y³⁺, Ti⁴⁺, Zr⁴⁺, Sn⁴⁺, *RE*³⁺ oder *RE*⁴⁺, enthält, wobei RE die Lanthaniden La bis Lu des Periodensystems repräsentieren.

Erfindungsgemäß erfolgt der Kontakt zwischen den mindestens zwei Reaktanten durch eine irreversible Beschädigung oder Zerstörung einer Barriere zwischen den Reaktanten, beispielsweise durch Bruch einer Glasampulle, die einen der Reaktanten enthält oder durch Durchstechen einer Membran, die die beiden Reaktanten separiert. Sowohl das Kompositmaterial als auch Wasser bzw. das wasserhaltige Gemisch können dabei in einem entsprechenden Kompartiment enthalten sein.

Das Reaktionsprinzip in der erfindungsgemäßen Vorrichtung beruht darauf, dass das enthaltene Kompositmaterial mit Wasser oder einem wasserhaltigen Gemisch kontaktiert wird. Hierbei reagiert das erdalkalimetallhaltige Metallhydrid unter Bildung von Wasserstoff und Bildung eines erdalkalimetallhaltigen Metallhydroxids ab.

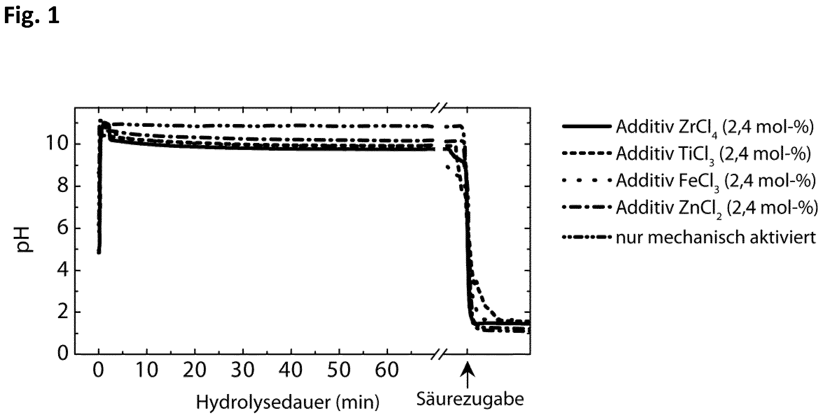

Die hauptsächliche Wirkung des Zusetzens einer geringen Menge eines wasserlöslichen und/oder unter Säurebildung hydrolysierbaren Salzes mit einem der obengenannten Metallkationen zu einem hydrierten erdalkalimetallhaltigen Material wird in der feinverteilten Bildung eines hydroxidischen Niederschlags in der Reaktionsmischung in der Vorrichtung vermutet. Durch diesen dynamischen Entzug von Hydroxidionen kommt es zu einer signifikanten Verringerung der Protonenkonzentration (Figur 1) in der gebildeten Suspension in der Vorrichtung, wodurch die Bildungstendenz von oberflächlichem Erdalkalimetallhydroxid kleiner wird, was wiederrum in einer deutlich erhöhten Reaktionskinetik der Hydrolyse resultiert.

Der wichtigste Vorteil der Erfindung besteht in der nur geringen Menge an zur Steigerung der Reaktionsgeschwindigkeit benötigtem Additiv im Kompositmaterial der Vorrichtung (und damit einer vernachlässigbar kleinen Verringerung der gravimetrischen Speicherdichte des Gesamtsystems). Dadurch ist es nicht nur möglich, eine hohe gravimetrische und volumetrische Speicherdichte zu realisieren, sondern auch durch eine Zugabe unterschiedlicher Salze als Additive die für eine bestimmte Anwendung benötigte Reaktionskinetik gezielt einzustellen. Ferner kann durch den dynamischen Entzug von Hydroxidionen die Hydrolyse einer im Vergleich zu anderen Vorrichtungen größeren Menge Kompositmaterial durchgeführt werden, ohne dass das in der Vorrichtung benötigte Wasser ausgetauscht oder aufbereitet werden muss.

Das Kompositmaterial liegt zumindest als integraler Bestandteil der Vorrichtung zur Erzeugung von Wasserstoff vor. Eine entsprechende Vorrichtung kann beispielsweise ein Wasserstoffgasgenerator sein, der ein entsprechendes Reaktionsgefäß zur Umsetzung des Kompositmaterials, beispielsweise mit Wasser oder wasserhaltigen Lösungen, umfasst, und ist im Folgenden genauer beschrieben.

Die Vorrichtung zur hydrolytischen Wasserstoff ist dadurch gekennzeichnet, dass darin das mindestens eine Kompositmaterial mit Wasser oder wasserhaltigen Gemischen kontaktiert und unter Bildung von Wasserstoff hydrolysiert wird.

Die Vorrichtung zur hydrolytischen Wasserstofferzeugung umfasst ferner einen gasdichten Reaktionsraum, mindestens eine Zufuhr für das Kompositmaterial und/oder mindestens eine Zufuhr für das Wasser bzw. das wasserhaltige Gemisch in den Reaktionsraum sowie mindestens eine Ableitung für den entstehenden Wasserstoff.

Aufgrund einer einfacheren Realisierung ist es dabei insbesondere vorteilhaft, wenn der Reaktionsraum selbst keine elektrischen Bestandteile, insbesondere keine Elektroden, aufweist oder beinhaltet.

In einer Ausführungsvariante der Vorrichtung zur hydrolytischen Erzeugung von Wasserstoff ist es jedoch möglich, dass sich sowohl der (ggf. komplette) Vorrat als auch die Zufuhr für das Kompositmaterial innerhalb des gasdichten Reaktionsraums selbst befinden - zusätzlich oder alternativ dazu kann sich auch ein Vorrat und die Zufuhr für das Wasser bzw. für das wasserhaltige Gemisch innerhalb des gasdichten Reaktionsraums befinden. Speziell eine Vorrichtung, die auf einen diskontinuierlichen und/oder einmaligen Betrieb zur Wasserstofferzeugung ausgelegt ist, lässt sich dadurch einfacher gestalten, weil beispielsweise ein zweiter gasdichter Behälter zur Abschottung des Kompositmaterials von Luftfeuchtigkeit als Bestandteil der Vorrichtung entfallen kann.

Zusätzlich kann ein Kontakt zwischen den mindestens zwei Reaktanten in einer erfindungsgemäßen Vorrichtung durch eine Einheit mit Kapillarwirkung erfolgen, beispielsweise durch einen Docht, einen Schwamm oder durch Fasern. Diese Ausführungsform kann beispielsweise vorsehen, dass Bestandteile des Kompositmaterials, die in flüssiger Form vorliegen und/oder das Wasser bzw. das wasserhaltige Gemisch über die Einheit mit Kapillarwirkung transportiert wird. Beispielsweise kann die Einheit mit Kapillarwirkung in dem bereits zuvor angesprochenen bevorzugt vorhandenen gasdichten Reaktionsraum münden. Insbesondere wird das Wasser bzw. wasserhaltige Gemisch mittels der Einheit mit Kapillarwirkung transportiert.

Auch ist es möglich, dass die Vorrichtung mindestens eine Einspritzdüse für das Kompositmaterial und/oder für das Wasser bzw. wasserhaltige Gemisch umfasst und/oder dass diese mindestens ein Kondensations- und/oder Kühlelement für bei der Hydrolysereaktion entstehenden Wasserdampf enthält. Eine oder mehrere Einspritzdüsen erleichtern dabei beispielsweise eine bessere Durchmischung bzw. feinere Verteilung der Reaktanten, eine Kondensationseinheit kann der Rückgewinnung von für die Reaktion benötigtem Wasser dienen und ebenso den in der Vorrichtung entstehenden Wasserstoff trocknen.

Zusätzlich dazu ist es möglich, dass die Vorrichtung mindestens eine Ableitung für die bei der Hydrolysereaktion entstehenden Abfallprodukte aus dem gasdichten Reaktionsraum enthält. Durch eine solche Einheit ist es beispielsweise möglich, eine Vorrichtung zur hydrolytischen Erzeugung von Wasserstoff semikontinuierlich oder kontinuierlich zu betreiben.

Die Erfindung betrifft in einer weiteren Ausführungsform ebenso eine Vorrichtung, in der das Kompositmaterial in einem vom Reaktionsraum separierten gasdichten Behälter vorgehalten wird. Dieser Behälter kann über eine Verbindungsleitung mit dem Reaktionsraum in Verbindung stehen. Durch diese Verbindungsleitung kann das Kompositmaterial gefördert werden.

In einer Ausführungsform der Erfindung wird das enthaltene Kompositmaterial und/oder Wasser bzw. wasserhaltiges Gemisch in einem elastischen Behälter, beispielsweise einer Blase aus einem Butyl-, Epichlorohydrin-, Ethylen-Propylen-, Fluoro-, Chloropren-, Chlor-Sulfat-Polyethylen-, Naturgummi-, Nitril-, Perfluoro-, Polyurethan- und/oder Silikonelastomer vorgehalten bzw. bereitgestellt. Beispielsweise ist das suspendierte oder pastenförmige Kompositmaterial vom elastischen Behälter umhüllt und durch Ausübung von Druck (mechanisch / pneumatisch / hydraulisch) auf den elastischen Behälter kann das Kompositmaterial in den gasdichten Reaktionsraum transportiert werden.

Eine Variante der Erfindung schließt eine Vorrichtung ein, in der das Kompositmaterial durch eine Förderschnecke in den gasdichten Reaktionsraum dosiert wird und/oder dorthin transportiert wird.

Eine weitere Variante der Erfindung ist dadurch gekennzeichnet, dass diese alternativ oder zusätzlich eine Einheit enthält, welche die Durchmischung der Reaktanten im gasdichten Reaktionsraum induziert und/oder verbessert, beispielsweise ein Rührwerk oder ein Ultraschallgenerator.

Eine erfindungsgemäße Variante der Vorrichtung umfasst ebenso alternativ oder zusätzlich mindestens eine Einheit zur Reduktion der Partialdrücke flüchtiger Substanzen und/oder von Wasserdampf und/oder zur Retention von Aerosolen in oder nach der Ableitung für den entstehenden Wasserstoff, beispielsweise einen Adsorber auf Zeolith- oder Kieselgelbasis, eine wasserstoffpermeable Membran, einen Faser- oder Sinterfilter. Solch eine Einheit kann vielfältige Aufgaben erfindungsgemäß lösen, beispielsweise den entstehenden Wasserstoff von Partikeln und/oder Wasserdampf befreien, als Flüssigkeitsbarriere dienen oder beispielsweise auch eine vollständig gassselektive Wasserstoffpermeation ermöglichen.

Eine weitere erfindungsgemäße Vorrichtung ist dadurch gekennzeichnet, dass diese eine Einheit zum Verhindern der Rückströmung von Wasser oder Wasserdampf aus dem Reaktionsraum in das Kompositmaterial umfasst, wie beispielsweise ein Rückschlagventil oder eine Schleuse. Insbesondere bei einem größeren Vorrat an Kompositmaterial bietet dies den Vorteil, dass die Reaktion durch Stoppen der Kompositmaterialzugabe unterbrochen werden kann, ohne dass das Kompositmaterial im Vorratsbehälter unerwünschterweise hydrolysiert.

Möglich ist auch eine Vorrichtung, die einen Wärmetauscher umfasst, wodurch beispielsweise über ein Thermofluid Wärme in den Reaktionsraum oder aus dem Reaktionsraum übertragen werden kann; eine Ausgestaltungsform dieser Möglichkeit ist dadurch gekennzeichnet, dass sich das Thermofluid in direktem Kontakt mit dem Kompositmaterial befindet und/oder Bestandteil desselben ist. In diesem Fall sollte das Thermofluid derart ausgestaltet sein, dass es gegenüber dem Kompositmaterial, insbesondere dem erdalkalimetallhaltigen Metallhydrid unreaktiv ist. Insbesondere sollte das Thermofluid ebenso einen Siedepunkt aufweisen, der oberhalb von 100 °C liegt.

Gemäß einer Ausgestaltungsform der Erfindung ist darin eine Einheit zur Erkennung unerwünschter Hydrolyse des Kompositmaterials enthalten, beispielsweise realisiert durch einen Feuchtigkeitsindikator im Kompositmaterial und/oder einen Wasserstoff- und/oder Drucksensor im Vorratsbehälter für das Kompositmaterial. Eine weitere Variante einer solchen Einheit kann eine Messeinrichtung der elektrischen Leitfähigkeit des Kompositmaterials darstellen.

Eine Ausgestaltungsform der Erfindung ist dadurch gekennzeichnet, dass das wasserhaltige Gemisch, welches in der Vorrichtung mit dem Kompositmaterial kontaktiert wird, mindestens einen Stoff zur Gefrierpunktserniedrigung, beispielsweise Ethylenglykol, Ethanol, Glycerin, Magnesiumchlorid, Calciumchlorid, Kaliumchlorid oder Natriumchlorid, enthält.

Gemäß einer bevorzugten Ausführungsform weist das mindestens eine Additiv des Kompositmaterials in der Vorrichtung eine Bildung schwerlöslicher Hydroxide in wässriger Lösung oberhalb von pH=8 und/oder das Hydroxid des Metallkations des Additivs weist eine Löslichkeit in Wasser von weniger als 10⁻³ mol/L auf.

Bevorzugt ist dabei, dass das mindestens eine Additiv des Kompositmaterials nicht alkalisch mit Wasser reagiert.

Gemäß der vorliegenden Erfindung ist es weiter bevorzugt, wenn das mindestens eine Additiv im Kompositmaterial der Vorrichtung als Metallchlorid, -fluorid, -bromid, -nitrat, -amid, -sulfat, -hydrogensulfat, -acetat, -butyrat, -formiat, -lactat, -malonat, -pyruvat, -tartrat oder -citrat vorliegt.

Das mindestens eine Additiv im Kompositmaterial der Vorrichtung ist weiter bevorzugt ausgewählt aus der Gruppe bestehend aus Zirconium-(IV)-chlorid, Zirconium-(IV)-acetat, Zirconium-(IV)-citrat, Zirconium-(IV)-formiat, Titan-(III)-chlorid, Eisen-(III)-chlorid, Eisen-(III)-acetat, Eisen-(III)-citrat, Eisen-(III)-formiat, Eisen-(II)-chlorid, Magnesiumchlorid, Magnesiumacetat, Magnesiumcitrat, Magnesiumformiat, Zinkchlorid, Zinkacetat, Zinkcitrat, Zinkformiat sowie Mischungen oder Kombinationen hieraus.

Besonders vorteilhaft ist, wenn die Gesamtmenge des Additivs im Kompositmaterial der Vorrichtung, bezogen auf die Gesamtmenge des Metallhydrids, klein ist. Insbesondere beträgt die Gesamtmenge des Additivs ≤ 15 mol-%, bevorzugt ≤5 mol-%, weiter bevorzugt ≤ 2,5 mol-%.

Ebenso ist es möglich, dass dem erdalkalimetallhaltigen Metallhydrid der Vorrichtung ein Additiv zur Verbesserung der Hydrierbarkeit und damit der Materialherstellung, ausgewählt aus der Gruppe bestehend aus RE-Oxiden, *TM-*Oxiden, *RE*-Nitriden, TM-Nitriden, *RE*-Carbiden, *TM*-Carbiden, *RE-*Halogeniden, *TM*-Halogeniden, Graphit, Graphen, Kohlenstoffnanoröhrchen, Fullerenen sowie Mischungen und/oder Kombinationen hieraus, wobei *RE* die Lanthaniden La bis Lu des Periodensystems und *TM* die Übergangsmetalle des Periodensystems repräsentieren, zugemischt ist.

Zusätzlich kann das Kompositmaterial der Vorrichtung gemäß der vorliegenden Erfindung mindestens ein Phosphat-, Carbonat- oder Sulfat-Abfangreagenz, ein Abfangreagenz mindestens zweiwertiger Anionen und/oder ein Abfangreagenz für Chelatkomplexbildner, wie beispielsweise ein lösliches Lithium-, Calcium-, Magnesium- oder Eisen-(III)-salz zum Fällen von störenden Phosphat- oder Carbonationen oder zum gezielten Binden von Chelatkomplexbildnern wie EDTA oder Kronenethern oder ein lösliches Strontium- oder Bariumsalz zum Fällen störender Sulfationen umfassen.

Alternativ bzw. zusätzlich hierzu ist es ebenso möglich, dass das Kompositmaterial der Vorrichtung in einem wasserlöslichen Polymer, insbesondere beispielsweise Polyvinylalkohol, Stärke und/oder Zellulose, eingebettet, verkapselt oder eingeschweißt, oder mit einem solchen Polymer beschichtet oder zusammen verdichtet vorliegt.

Insbesondere liegt das Kompositmaterial der Vorrichtung gemäß der vorliegenden Erfindung als Granulat oder als Pulver, als Suspension, als Paste oder in verdichteter Form, wie beispielsweise als Tabletten, als Presslinge oder als verdichtete Schüttung, vor.

Zusätzlich hierzu ist es möglich, dass das Kompositmaterial in der Vorrichtung mit einem elastischen Behälter umhüllt vorliegt.

Alternativ oder zusätzlich ist es ebenso möglich, dass Kompositmaterial und Wasser oder wasserhaltiges Gemisch beispielsweise durch eine Membran oder eine andersgeartete Barriere voneinander separiert sind und dass der Kontakt zwischen diesen Reaktanten durch Zerstörung der Membran, beispielsweise durch Durchstechen erfolgt.

Vor Einsatz und/oder zur Herstellung kann das mindestens eine Metallhydrid und/oder das mindestens eine Additiv des Kompositmaterials der Vorrichtung einer mechanischen Aktivierung unterzogen werden, beispielsweise durch Mahlen, Walzen oder Umformen.

Ferner ist es bevorzugt, dass das Kompositmaterial der Vorrichtung mindestens ein weiteres Material zur Erleichterung der Herstellung, ausgewählt aus der Gruppe bestehend aus Mahlhilfsmittel, wie beispielsweise Stearinsäure oder Isooctan, und/oder Hilfsmittel zur Verdichtung, wie beispielsweise Zinkstearat, Graphit, Magnesium oder ein Wachs, und/oder Verbesserung der Hydrolyseeigenschaften, wie beispielsweise mindestens ein wasserlösliches Polymer, insbesondere Polyvinylalkohole, Stärke oder Zellulose, enthält oder umfasst.

Eine vorteilhafte Ausgestaltung der Erfindung ist dadurch gekennzeichnet, dass das enthaltene Kompositmaterial mindestens eine bei Normalbedingungen flüssige Phase umfasst, die sich inert gegenüber dem Metallhydrid verhält, bevorzugt ausgewählt aus der Gruppe aprotischer Substanzen oder Gemische, weiter bevorzugt wenig polarer oder unpolarer organischer Substanzen oder Gemische, besonders bevorzugt ausgewählt aus der Gruppe von Alkanen, Amiden, Estern und Ethern und weiter bevorzugt aus der Gruppe von Stoffen, die eine oder mehrere Carbonsäureestergruppen enthalten.

Bei einer Variante der Ausgestaltung enthält das Kompositmaterial der Vorrichtung mindestens eine flüssige Phase mit einem Siedepunkt (bei Normaldruck) von mehr als 100 °C, bevorzugt von mehr als 150 °C und/oder einem Dampfdruck von weniger als 1 hPa bei 20 °C, bevorzugt von weniger als 10 Pa bei 20 °C.

Eine weitere vorteilhafte Ausgestaltung der Erfindung ist dadurch gekennzeichnet, dass das enthaltene Kompositmaterial mit mindestens einem Feststoff zusammen verdichtet vorliegt, der sich bei Normaldruck im Temperaturbereich zwischen 25 und 100 °C verflüssigt, bevorzugt ausgewählt aus der Gruppe aprotischer Substanzen oder Gemische, weiter bevorzugt wenig polarer oder unpolarer organischer Substanzen oder Gemische, besonders bevorzugt ausgewählt aus der Gruppe von Alkanen, Amiden, Estern und Ethern, weiter bevorzugt aus der Gruppe von Stoffen, die eine oder mehrere Carbonsäureestergruppen enthalten, beispielsweise einem Wachsester oder Oxalsäuredimethylester. So können beispielsweise Kompositmaterialien in der Vorrichtung enthalten sein, die ausschließlich heißreaktiv, nicht aber kaltreaktiv sind (siehe Ausführungsbeispiel 10).

Insbesondere ist es vorteilhaft, wenn das Kompositmaterial der Vorrichtung mindestens eine aprotische organische Substanz mit mindestens einer Carbonsäureestergruppe enthält, die bevorzugt keine aciden Protonen enthält, insbesondere keine unveresterten Säuregruppen, keine Hydroxygruppen und keine primären und sekundären Aminogruppen.

Im Folgenden werden die Begriffe Carbonsäureester und Ester synonym für aprotische organische Substanz mit mindestens einer Carbonsäureestergruppe verwendet, der Begriff Wasser schließt wasserhaltige Gemische mit ein.

Der Hauptvorteil der Zugabe eines Carbonsäureesters zum Kompositmaterial besteht darin, dass sich eine passende Konsistenz sowie eine wesentliche Erhöhung der Reaktionsgeschwindigkeit des Kompositmaterials ergibt, so dass einerseits technisch sehr vorteilhaft dosiert werden kann und es andererseits bei Wasserzugabe zu einer extrem hohen Hydrolysegeschwindigkeit kommt. Beispielsweise kann ein quantitativer Umsatz von Kompositmaterial und Wasser innerhalb von weniger als 3 Minuten erfolgen (siehe Ausführungsbeispiel 9), was insbesondere im Vergleich zu einer Reaktionsdauer gemäß Stand der Technik von 20 h in WO 01/68517 eine sehr große Verbesserung darstellt. Weiterhin kann eine sehr gute Steuerbarkeit des Hydrolyseprozesses realisiert werden.

Weitere Vorteile des bevorzugten Kompositmaterials, das eine aprotische organische Substanz mit mindestens einer Carbonsäureestergruppe beinhaltet, sind dabei:
- Eine einfachere Steuerbarkeit der Reaktion ist möglich, weil durch den Ester im Kompositmaterial eine vorteilhafte Zugabe des Wassers zum Kompositmaterial ermöglicht wird (ohne Ester kommt es bei der Zugabe von Wasser zum Feststoff zur Bildung passivierender Hydroxidschichten auf der Hydridoberfäche) - siehe Ausführungsbeispiel 8.
- Es wird deutlich weniger Wasser für die Hydrolysereaktion benötigt (ca. die 1,5-fach-stöchiometrische Menge ist ausreichend).
- Eine bessere Nutzung der Reaktionswärme kann erfolgen (da weniger Wasser benötigt wird, welches bei der Reaktion aufgeheizt werden muss).
- Es ergibt sich ein Einsparpotential an benötigtem Metallsalzadditiv.
- Durch die Dispergierwirkung des Esters gegenüber sich bildenden Hydroxiden bei substöchiometrischen Mengen Wasser wird nach Reaktionsunterbrechung ein deutlich verbessertes Wiederanlaufverhalten erzielt (siehe ebenfalls Ausführungsbeispiel 8).
- Es kann ein Carbonsäureester mit Entschäumerwirkung eingesetzt werden.
- In vielen Fällen ist eine Agitation trotz eines zweiphasigen Gemischs nicht notwendig - die Reaktionsmischung wird also auch rein konvektiv homogenisiert.
- Eine vollständige thermische Entkopplung kann realisiert werden (z.B. aufgrund eines besseren Wärmeübergangs flüssig→fest vs. gasförmig→fest).
- Der Wärmetausch kann optional über den zumindest unter Reaktionsbedingungen (> 25 °C) flüssigen Ester erfolgen.
- Mischungsverhältnisse von Metallhydrid, Metallsalzadditiv und Ester lassen sich beliebig vom festen über den pastösen bis zum flüssigen (suspendierten) Zustand einstellen - dadurch lassen sich einfache Dosiermöglichkeiten realisieren, beispielsweise durch eine Förderschnecke oder Elastomerblase.
- Mit Estern, die erst unter dem Einfluss von (Reaktions-)wärme schmelzen, können Kompositmaterialien erzeugt werden, die ausschließlich heißreaktiv sind und somit verbesserte Lagereigenschaften besitzen (beispielsweise aufgrund einer verringerten Empfindlichkeit gegenüber Luftfeuchtigkeit) - siehe Ausführungsbeispiel 10.
- Carbonsäureester haben viele Vorteile gegenüber anderen potenziell geeigneten, bekannten Materialien für Metallhydridsuspensionen wie Alkanen oder Ether: Viele Ester sind ungiftig, preisgünstig, nichtflüchtig und biologisch abbaubar.

Die Nichtreaktivität der meisten Carbonsäureester gegenüber erdalkalimetallhaltigen Metallhydriden ist insofern bemerkenswert, da insbesondere bei salzartigen Hydriden eigentlich ein nucleophiler Angriff des Hydrids am Carbonylkohlenstoffatom der Estergruppe(n) zu erwarten wäre. In eigenen Untersuchungen und vielen Versuchen konnte jedoch bestätigt werden, dass sich Kompositmaterialien bestehend aus erdalkalimetallhaltigen Metallhydriden, Metallsalzadditiven und Carbonsäureestern auch über eine Lagerdauer von nahezu einem Jahr chemisch nicht verändern und somit offenbar keiner nennenswerten Alterung unterliegen. Offensichtlich ist die Reaktivität, insbesondere von Magnesiumhydrid, aufgrund dessen stärker ausgeprägten kovalenten Bindungscharakters, im Vergleich zu beispielsweise Alkalimetallhydriden, gegenüber Estern, äußerst eingeschränkt und somit beispielsweise mit der Reaktivität einiger Komplexhydride vergleichbar.

Vorteilhaft ist die Erfindung ferner ausgestaltet, wenn die mindestens eine aprotische organische Substanz mit mindestens einer Carbonsäureestergruppe im Kompositmaterial der Vorrichtung ausschließlich aus Carbonsäureestergruppen und aliphatischen, verzweigten und/oder aliphatischen, unverzweigten Kohlenwasserstoffresten aufgebaut ist.

Insbesondere enthält die mindestens eine aprotische organische Substanz mit mindestens einer Carbonsäureestergruppe genau eine, zwei, drei oder vier Carbonsäureestergruppen .

Vorzugsweise beträgt die Gesamtmenge der mindestens einen aprotischen organischen Substanz mit mindestens einer Carbonsäureestergruppe in der Zubereitung des Kompositmaterials zwischen 1 und 80 Gew.-%, bevorzugt zwischen 5 und 50 Gew.-%.

Die mindestens eine aprotische organische Substanz mit mindestens einer Carbonsäureestergruppe ist weiter bevorzugt nicht oder nur teilweise mit Wasser mischbar und weist somit bevorzugt eine Löslichkeitsobergrenze von weniger als 25 Gew.-% (entsprechend 250 g Ester / kg Wasser) auf. In eigenen Untersuchungen wurde erkannt, dass eine vollständige Mischbarkeit von Ester und Wasser hingegen eine Verringerung der Reaktionsgeschwindigkeit und/oder des Gesamtumsatzes mit sich bringt.

Besonders bevorzugte organische Substanzen mit mindestens einer Carbonsäureestergruppe sind dabei ausgewählt aus der Gruppe bestehend aus bei Raumtemperatur flüssigen Carbonsäureestern, insbesondere Octandisäure-1,8-dimethylester; Pentandisäure-1,5-dipropylester; Heptandisäure-1,7-diethylester; Oxacyclotridecan-2-on; Hexandisäure-1,6-dipropylester; Decandisäure-1,10-dimethylester; Butandisäure-1,4-dibutylester; Octandisäure-1,8-diethylester; Nonandisäure-1,9-diethylester; Pentandisäure-1,5-dibuylester; Propandisäure-1,5-dipentylester; Dodecansäuremethylester; Undecansäureethylester; Octansäurepentylester; Hexansäureheptylester; Hexandisäure-1,6-dibutylester; Decandisäure-1,10-diethylester; Hexandisäure-1,6-bis(2-methylpropyl)-ester; Butandisäure-1,4-dipentylester; Dodecansäureethylester; Essigsäuredodecylester; Heptansäureheptylester; Octansäurehexylester; Hexansäureoctylester; 2,2,4,4-Pentantetracarboxylsäure-1,2,4,5-tetraethylester; 1,4-Dioxacycloheptadecan-5,17-dion; Butansäure-1,2,3-propantriylester; Tributtersäureglycerinester; Octansäureheptylester; Heptansäureoctylester; Hexansäurenonylester; Tetradecansäureethylester; Octansäureoctylester; Tetradecansäure-l-methylester; Hexansäureundecylester; 1-Hexadecanol-1-acetat; Decansäureoctylester; Hexadecansäure-l-methylester; Decansäuredecylester; Hexandisäure-1,6-dioctylester; Hexandisäure-1-decyl-6-octylester; Hexandisäure-1,6-dinonylester; Nonandisäure-1,9-bis(2-ethylhexyl)-ester; 1,2,3-Propantriol-1,2,3-triacetat [Triacetin]; Octansäure-1,1',1"-(1,2,3-propantriyl)-ester [Glycerintricaprylat]; Decandisäure-1,10-bis(2-ethylhexyl)-ester [Dioctylsebacat]; Hexandisäure-1,6-bis(2-ethylhexyl)-ester; Decandisäure-1,10-dibutylester; Decansäure-1,1',1"-(1,2,3-propantriyl)-ester [Glycerintricaprinat]; Tridecansäuremethylester; Tetradecansäurebutylester; Hexansäure-1,1',1"-(1,2,3-propantriyl)-ester [Glycerintricapronat]; Hexadecansäure-(2-ethylhexyl)-ester; Hexandisäure-1,6-dihexylester; Nonandisäure-1,9-dihexylester; Hexandisäure-1,6-diheptylester; Nonansäurebutylester; Dodecansäurehexylester; Nonansäurepentylester; Nonansäureheptylester; Nonansäure-1,9-bis(2-ethylbutyl)-ester; Hexandisäure-1,6-bis(2-ethylbutyl)-ester; Hexansäuretetradecylester; Hexansäuretridecylester.

Zudem ist es möglich, dass die Carbonsäureester ausgewählt sind aus der Gruppe bestehend aus Festcarbonsäureestern. Hierbei kommen insbesondere Tetradecansäuremethylester; Hexadecansäuremethylester; Dodecansäureethylester; Octadecansäuremethylester; Eicosansäuremethylester; Decandisäure-1,10-dimethylester; Docosansäuremethylester; Hexadecansäure-1-methylethylester; Tridecandisäure-1,13-dimethylester; Octadecansäurebutylester; Eicosansäureethylester; Docosansäureethylester; Hexadecandisäure-1,16-dimethylester; 1,12-Dodecandisäure-1,12-diacetat; Hexadecansäurehexadecylester; Hexandisäure-1,6-dioctylester; Octadecandisäure-1,18-diethylester; Butansäure-1,2,3-propantriylester; 1,1,2,2-Ethantetracarboxylsäure-1,1,2,2-tetraethylester; Oxacyclotridecan-2-on ; Hexadecansäure-1,1',1"-(1,2,3-propantriyl)-ester [Tripalmitin]; Tetradecansäure-1,1',1"-(1,2,3-propantriyl)-ester [Trimyristin]; 2,2-Bis(octadecanoyloxymethyl)-1,3-propandiyldioctadecanoat [Pentaerythrittetrastearat]; Octadecansäureoctadecylester [Stearylstearat]; Docosansäure-1,1',1"-(1,2,3-propantriyl)-ester [Tribehenin]; Nonadecansäureethylester; Docosansäuredocosylester [Behenylbehenat]; Decansäure-1,1',1"-(1,2,3-propantriyl)-ester [Tricaprin]; 2,2-Bis[(acetyloxy)methyl]-propan-1,3-diol-1,3-diacetat; Octadecansäure-1,1',1"-(1,2,3-propantriyl)-ester [Glycerintristearat]; 2-Octadecanoyloxyethyloctadecanoat [Ethylenglycoldistearat]; Dodecansäure-1,1',1"-(1,2,3-propantriyl)-ester [Trilaurin] infrage.

Zudem ist es möglich, dass Mischungen bzw. Kombinationen aus mindestens zwei der zuvor genannten Carbonsäureester umfasst sind.

Weiter vorteilhaft ist, wenn das Kompositmaterial der Vorrichtung keine Substanzen enthält, die Hydroxidionen und/oder Wasser enthalten oder freisetzen.

Auch ist es möglich, dass das enthaltene Kompositmaterial der Vorrichtung mit mindestens einem gegenüber dem Metallhydrid inerten Feststoff zusammen verdichtet vorliegt, der als Binde- und/oder Sprengmittel fungiert, wie beispielsweise mikrokristalline Cellulose oder Polyvinylpyrrolidon.

Erfindungsgemäß ist ebenso möglich, dass das Kompositmaterial in der Vorrichtung *in situ* hergestellt und/oder zubereitet und/oder erzeugt wird. Dies kann beispielsweise durch eine in der Vorrichtung enthaltene Einheit, welche die zur Herstellung des Kompositmaterials benötigten Ausgangssubstanzen miteinander vermischt, zur Reaktion bringt und/oder verdichtet, erfolgen.

Neben einer Vorrichtung zur Erzeugung von Wasserstoff betrifft die vorliegende Erfindung ebenso eine Vorrichtung zur Erzeugung elektrischer Energie, welche eine im Voranstehenden beschriebene Vorrichtung zur Erzeugung von Wasserstoff sowie mindestens einen Apparat zur Erzeugung elektrischer Energie aus Wasserstoff, insbesondere mindestens eine Brennstoffzelle oder eine Verbrennungskraftmaschine mit Generator, umfasst.

Die Vorrichtung zur Erzeugung elektrischer Energie umfasst somit beispielsweise einen Wasserstoffgasgenerator, das hierbei erzeugte Wasserstoffgas kann unmittelbar in einem sich anschließenden Generator bzw. einer Brennstoffzelle in elektrische Energie umgewandelt werden.

Zudem betrifft die vorliegende Erfindung ein Verfahren zur Erzeugung von Wasserstoff, bei dem in einer erfindungsgemäßen Vorrichtung Wasser oder wasserhaltige Gemische mit einem Kompositmaterial kontaktiert und unter Bildung von Wasserstoff hydrolysiert wird.

Hierzu kann Wasser in sämtlichen möglichen Aggregatszuständen verwendet werden, beispielsweise als Eis, als Flüssigkeit oder als Dampf. Dasselbe gilt für wasserhaltige Gemische. Bevorzugt wird Wasser bzw. ein wasserhaltiges Gemisch in flüssigem Aggregatszustand eingesetzt.

In einer bevorzugten Ausführungsform des erfindungsgemäßen Verfahrens wird das Gemisch aus Kompositmaterial und Wasser oder wasserhaltigem Gemisch in der Vorrichtung während der Hydrolyse temperiert, vorzugsweise bei Temperaturen zwischen 10 und 80 °C.

Insbesondere erfolgt die Temperierung dadurch, dass ein Wärmeaustausch zwischen Abwärme einer Brennstoffzelle und/oder einer Verbrennungskraftmaschine und/oder der Reaktionswärme eines thermochemischen Energiespeichers und/oder einer chemischen Reaktion und/oder elektrisch erzeugter Wärme/Kälte und dem Kompositmaterial bzw. dem Reaktionsgemisch aus Kompositmaterial und Wasser erfolgt.

Beim erfindungsgemäßen Verfahren ist es zudem bevorzugt, dass zur Steuerung der Hydrolysereaktion bzw. zur Bestimmung der Hydrolyserate eine oder mehrere der folgenden Größen zeitabhängig und/oder zeitunabhängig überwacht und/oder geregelt werden: Druck, Temperatur, Füllstand, Wasserstoffvolumen, pH, elektrische Leitfähigkeit, Rührgeschwindigkeit, zugegebene bzw. zuzugebende Menge des Kompositmaterials und/oder zugegebene bzw. zuzugebende Menge des Wassers bzw. des wasserhaltigen Gemischs.

Die Erfindung betrifft ebenso Verwendungen der Vorrichtung zur Erzeugung von Wasserstoff, bzw. der Vorrichtung zur Erzeugung elektrischer Energie bzw. des Verfahrens zur Erzeugung von Wasserstoff zur Versorgung von Backup- oder Notstromversorgungen, tragbaren elektronischen Geräten, Ladegeräten, Beleuchtung, maritimen Anwendungen, insbesondere Bojen und Signalzeichen, Sensoren und Sonden, autarken Funkstationen, Feldbatterien, Auftriebsgeneratoren und/oder Demonstratoren, z.B. für Schulen oder Messen mit elektrischer Energie und/oder Wasserstoff.

Die vorliegende Erfindung wird anhand der nachfolgenden Ausführungen näher erläutert, ohne die Erfindung auf speziell dargestellte Parameter zu beschränken.
Figur 1 zeigt die Protonenkonzentration (pH) in der Vorrichtung in Abhängigkeit der Hydrolysedauer für mechanisch aktiviertes Magnesiumhydrid ohne Additive und für Kompositmaterialien mit ausgewählten Additiven.
Figur 2 zeigt den Reaktionsumsatz in der Vorrichtung in Abhängigkeit der Hydrolysedauer für mechanisch aktiviertes Magnesiumhydrid ohne Additive und für Kompositmaterialien mit ausgewählten Additiven.
Figur 3 zeigt den Reaktionsumsatz in der Vorrichtung in Abhängigkeit der Hydrolysedauer von verdichtetem und unverdichtetem Kompositmaterial.
Figur 4 zeigt eine Ausgestaltungsform für in der erfindungsgemäßen Vorrichtung enthaltenes Kompositmaterial (1), welches in eine Folie aus wasserlöslichem Polymer (2) mit Schweißnähten (3) eingeschweißt ist.
Figur 5 zeigt eine weitere Ausgestaltungsform für in der erfindungsgemäßen Vorrichtung enthaltenes verdichtetes Kompositmaterial (1), welches mit wasserlöslichem Polymer (4) beschichtet vorliegt.
Figur 6 zeigt eine weitere Ausgestaltungsform für in der erfindungsgemäßen Vorrichtung enthaltenes Kompositmaterial (1), welches in wasserlöslichem Polymer (5) verkapseltet ist.
Figur 7 zeigt eine erfindungsgemäße Ausgestaltung einer Vorrichtung zur hydrolytischen Erzeugung von Wasserstoff.
Figur 8 zeigt eine erfindungsgemäße Ausgestaltung einer Vorrichtung zur hydrolytischen Erzeugung von Wasserstoff.
Figur 9 zeigt eine weitere erfindungsgemäße Ausgestaltung einer Vorrichtung zur hydrolytischen Erzeugung von Wasserstoff.
Figur 10 zeigt eine weitere erfindungsgemäße Ausgestaltung einer Vorrichtung zur hydrolytischen Erzeugung von Wasserstoff.

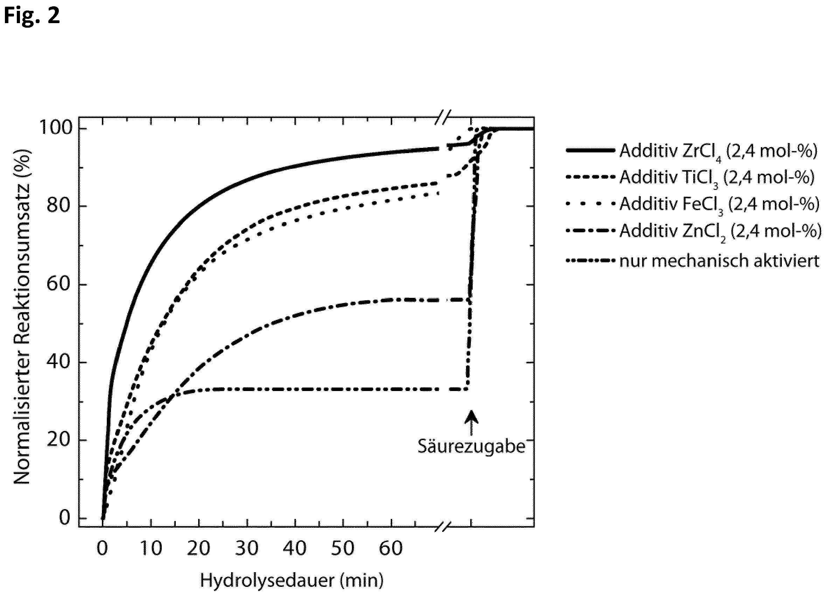

Die Lösung des Problems einer unzureichenden Reaktionskinetik und/oder einem Gesamtumsatz bei der Hydrolyse von hydrierten erdalkalimetallhaltigen Wasserstoffspeichermaterialien in Vorrichtungen zur hydrolytischen Wasserstofferzeugung besteht in der Mischung des (ggf. mechanisch kurz aktivierten) zu hydrolysierenden Materials mit mindestens einem Additiv bestehend aus einem festen, wasserlöslichen und/oder unter Säurebildung hydrolysierbaren Salz mit mindestens zweiwertigen Kationen (z.B. Zn²⁺, Ca²⁺, M Sn²⁺, Fe²⁺,Fe³⁺, Ti³⁺, Ga³⁺, Sc³⁺, Al³⁺, Y³⁺, *RE*³⁺, *RE*⁴⁺, Ti⁴⁺, Zr⁴⁺, Sn⁴⁺; *RE*=La - Lu). Überraschenderweise sind geringste Mengen vieler dieser Salze (z.B. 2,4 mol-% TiCl₃, 2,4 mol-% ZrCl₄, 2,4 mol-% FeCl₃ oder 2,4 mol-% ZnCl₂) in der Lage, die Hydrolysereaktion äußerst effektiv zu beschleunigen, so dass ein Reaktionsumsatz von teilweise über 90 % in weniger als 70 Minuten erreichbar ist (siehe Figur 2, Ausführungsbeispiele 1-4).

Mehrere Tests haben gezeigt, dass auch die Hydrolyse von erdalkalimetallhaltigen Hydriden mit Additiven wie ZrCl₄ eine langsamere Reaktionskinetik und auch einen geringeren Gesamtreaktionsumsatz aufweist, wenn für die Hydrolyse nur Wasser zur Verfügung steht, welches beispielsweise Phosphationen enthält. Als Abhilfe dafür eignen sich spezielle Abfangreagenzien, wie beispielsweise Magnesiumcitrat oder Lithiumchlorid, die in stöchiometrischer Menge oder geringem Überschuss (bezogen auf die abzufangende lonensorte) zum Metallhydrid zugegeben die Bildung von schwerlöslichen Salzen (z.B. Magnesiumphosphat) auf der Oberfläche des Hydrids wirkungsvoll verhindern. Die schwerlöslichen Salze fallen stattdessen feinverteilt in der Reaktionslösung aus.

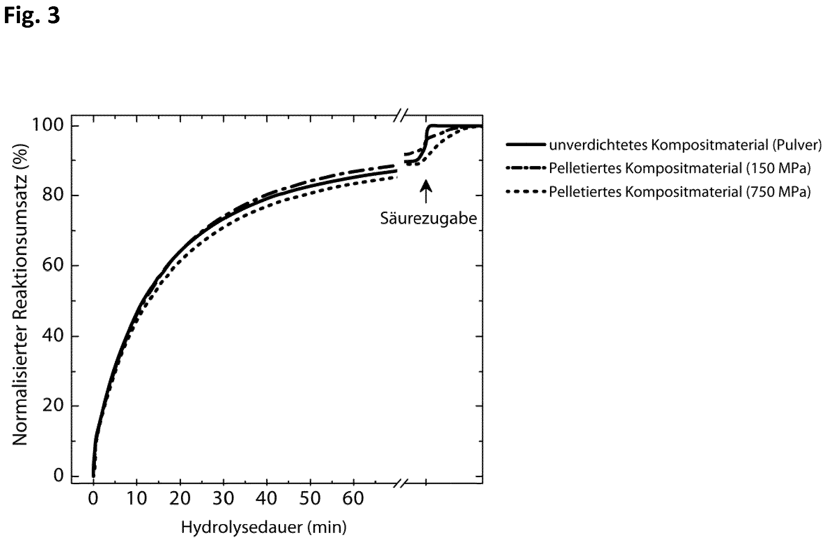

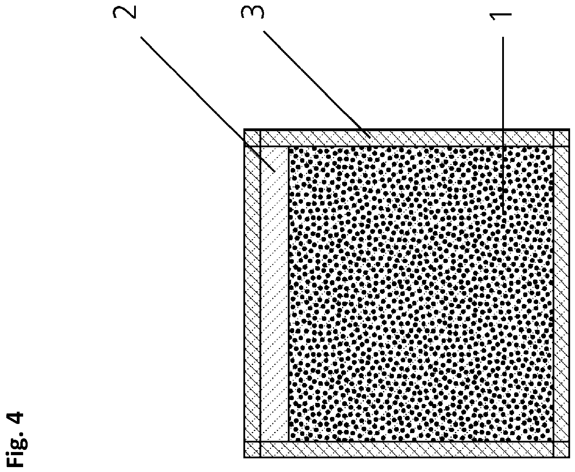

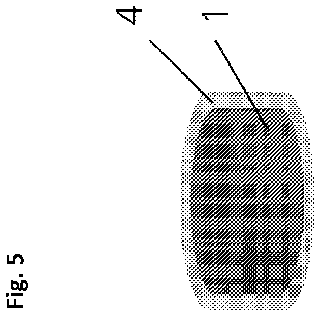

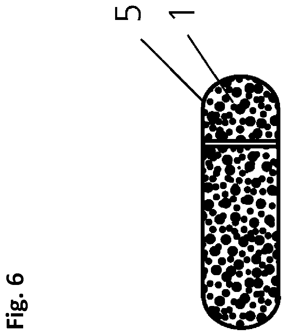

Eine Lösung des Problems einer unzureichenden Handhabbarkeit und Lagerfähigkeit des Metallhydridpulvers in der Vorrichtung konnte durch eine Verdichtung des Materials (z.B. durch uniaxiales Verpressen zu Tabletten oder durch Granulieren) und einem Einschluss des Materials in wasserlöslichen Polymeren wie Polyvinylalkohol erreicht werden. Überraschenderweise hatte ein Verdichten im Rahmen der Messtoleranzen der Bestimmung der Wasserstoffentwicklung bei vielen Additiven keinen messbaren oder nur einen sehr geringen Einfluss auf sowohl die Reaktionskinetik der Hydrolyse als auch auf den Reaktionsgesamtumsatz (Figur 3, Ausführungsbeispiel 5). Der Einschluss des Materials in ein wasserlösliches Polymer (Figur 4 bis 6) bewirkte dagegen sowohl eine signifikante Verbesserung der Lagerfähigkeit des Metallhydrids an Luft, als auch die gewünschte materialseitig realisierte Anlaufverzögerung für die Hydrolyse (Ausführungsbeispiel 7).

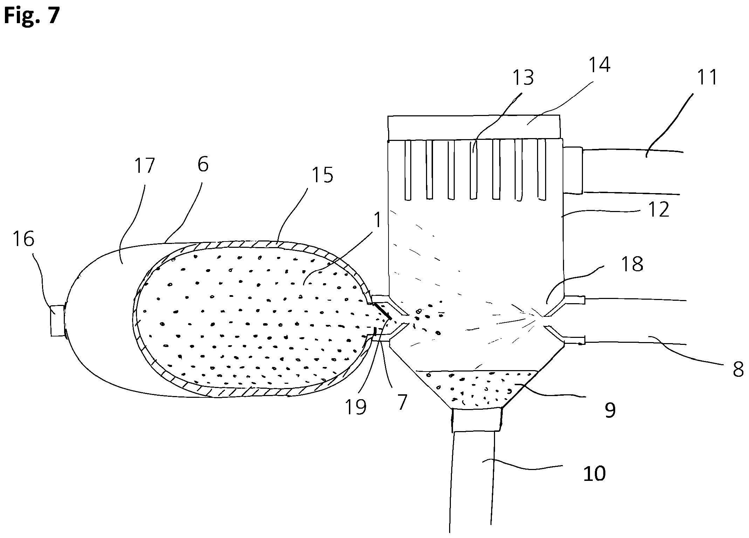

Figur 7 zeigt eine erste Ausführungsform einer erfindungsgemäßen Vorrichtung zur Erzeugung von Wasserstoff. Diese umfasst ein suspendiertes und/oder pastöses Kompositmaterial (1), welches in einem separaten Vorratsbehälter (6) vorliegt, durch eine Zufuhr (7) zusammen mit Wasser oder einem wasserhaltigem Gemisch (8) mittels einer Einspritzdüse (18) einem gasdichten Reaktionsraum (12) zugeführt werden kann, wobei eine Reaktionsmischung bzw. Abfallprodukte (9) entstehen, die über eine Ableitung (10) ebenso wie der entstehende Wasserstoff (11) aus dem Reaktionsraum entfernt werden können. Über ein Kühlelement für entstehenden Wasserdampf (13) sowie einen Lüfter (14) kann bei der Reaktion entstehender Wasserdampf rückkondensiert werden. Die Zufuhr des Kompositmaterials (1) kann über eine Gas- und/oder Flüssigkeitszufuhr (16) am Vorratsbehälter (6), welche durch Druckaufbau im Freiraum (17) des Vorratsbehälters auf eine darin befindliche Elastomerinnenblase (15) wirksam ist, geregelt werden. Eventuell in den Vorratsbehälter (6) rückströmender Wasserdampf aus dem gasdichten Reaktionsraum kann durch ein Rückschlagventil (19) unterbunden werden.

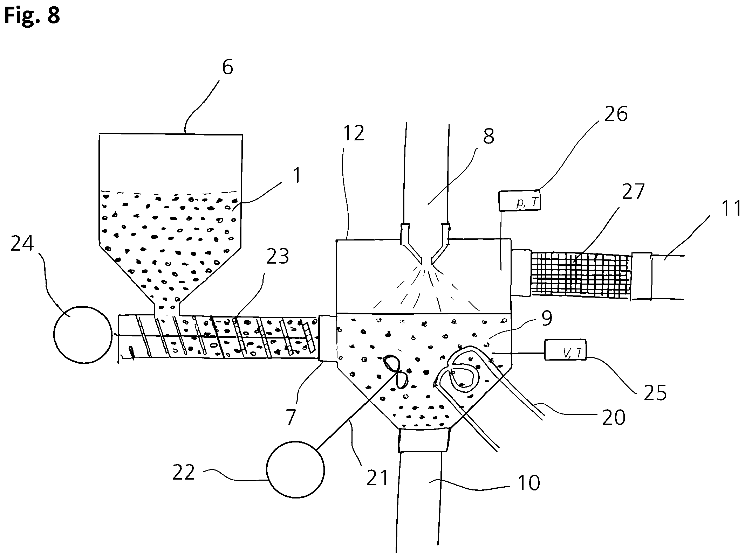

Figur 8 zeigt eine zweite erfindungsgemäße Vorrichtung zur Erzeugung von Wasserstoff. Diese umfasst ein pulverförmiges, verdichtetes, pastöses, suspendiertes, verkapseltes, eingeschweißtes oder beschichtetes Kompositmaterial (1), welches in einem separaten Vorratsbehälter (6) vorliegt, durch eine Zufuhr (7) zusammen mit Wasser oder einem wasserhaltigen Gemisch (8) dem gasdichten Reaktionsraum (12) zugeführt werden kann, wobei eine Reaktionsmischung bzw. Abfallprodukte (9) entstehen, die über eine Ableitung (10) ebenso wie der entstehende Wasserstoff (11) aus dem Reaktionsraum entfernt werden können. Über einen Wärmetauscher (20) kann dem Reaktionsraum Wärme entzogen oder zugeführt werden, ein Rührwerk (21) mit Antrieb (22) kann für die Durchmischung der Reaktionsmischung sorgen. Die Zufuhr des Kompositmaterials kann über eine Förderschnecke (23) mit Antrieb (24) erfolgen und über Mess-/Regeleinheiten für Füllstand, Temperatur (25) bzw. Druck, Temperatur (26) geregelt werden. Eine Einheit zur Reduktion der Partialdrücke flüchtiger Substanzen bzw. Partikelretention (27) kann den entstehenden Wasserstoff aufreinigen.

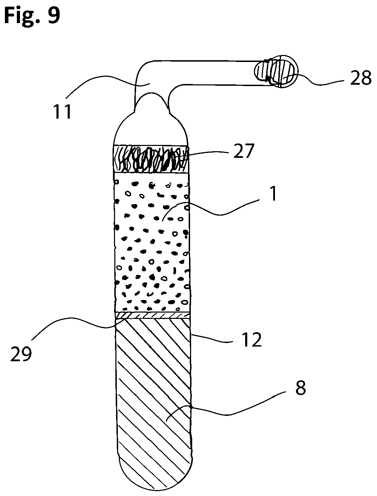

Figur 9 zeigt eine dritte erfindungsgemäße Vorrichtung zur Erzeugung von Wasserstoff. Diese umfasst ein pulverförmiges, verdichtetes, pastöses, suspendiertes, verkapseltes, eingeschweißtes oder beschichtetes Kompositmaterial (1), welches sich direkt im gasdichten Reaktionsraum (12) befindet. Die Wasserzufuhr (8) erfolgt hier durch irreversible Beschädigung einer Barriere (29), z.B. einer Membran. Eine Einheit zur Reduktion der Partialdrücke flüchtiger Substanzen bzw. Wasser- bzw. Partikelretention (27) kann den entstehenden Wasserstoff (11) aufreinigen. Ein gasdichter, entfernbarer Verschluss (28) kann der Verhinderung des Eindringens von Luft in die Vorrichtung vor Gebrauch dienen.

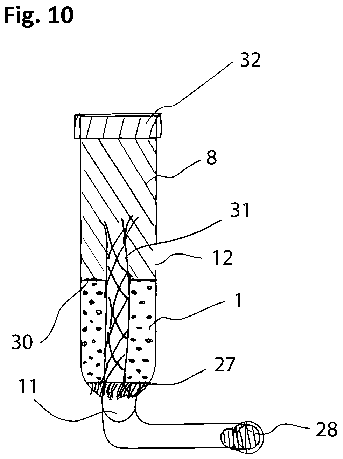

Figur 10 zeigt eine vierte erfindungsgemäße Vorrichtung zur Erzeugung von Wasserstoff. Diese umfasst ein pulverförmiges, verdichtetes, pastöses, suspendiertes, verkapseltes, eingeschweißtes oder beschichtetes Kompositmaterial (1), welches sich direkt im gasdichten Reaktionsraum (12) befindet. Die Wasserzufuhr (8) der durch eine permanente Barriere (30) getrennten Reaktanten erfolgt hier durch eine Einheit mit Kapillarwirkung (31), in der Figur durch einen Docht angedeutet. Eine Einheit zur Reduktion der Partialdrücke flüchtiger Substanzen bzw. Wasser- bzw. Partikelretention (27) kann den entstehenden Wasserstoff (11) aufreinigen. Ein gasdichter, entfernbarer Verschluss (28) kann der Verhinderung des Eindringens von Luft in die Vorrichtung vor Gebrauch dienen, ein weiterer Verschluss (32) kann zur Befüllung der Vorrichtung mit Wasser oder wasserhaltigen Gemischen dienen.

Mögliche Anwendungsfelder umfassen u.A.:
- kleine bis mittlere Backup- oder Notstromversorgungen
- tragbare elektronische Geräte und Ladegeräte
- Camping- und Outdoorbereich
- Beleuchtung
- maritime Anwendungen (Bojen und Signalzeichen)
- Sensoren und Sonden
- autarke Funkstationen
- militärischer Bereich (z.B. Feldbatterien)
- Auftriebsgeneratoren (zur Erzeugung von Wasserstoff als Auftriebsgas)
- Demonstratoren (z.B. für Schulen oder Messen)

### Ausführungsbeispiele

Die Reaktionsumsätze aller Ausführungsbeispiele wurden durch Messungen des zum jeweiligen Zeitpunkt entstandenen Wasserstoffvolumens in einer Vorrichtung zur hydrolytischen Erzeugung von Wasserstoff ermittelt. Zur Normalisierung diente das jeweils insgesamt (nach Zugabe einer Brønsted-Säure im Überschuss) ermittelte Gesamtwasserstoffvolumen nach beendeter Reaktion. Alle gemessenen Volumina wurden mittels des ermittelten Luftdrucks, der *in situ* gemessenen Temperatur sowie des Wasserdampfpartialdrucks bei den gegebenen Bedingungen auf Normbedingungen umgerechnet.

### Beispiel 1

Ca. 500 mg eines mechanisch kurz (≤ 1 h) aktivierten pulverförmigen Kompositmaterials bestehend aus MgH₂ und 2,4 mol-% ZrCl₄ wurden in 75 mL entionisiertem Wasser in einer Vorrichtung zur hydrolytischen Wasserstofferzeugung hydrolysiert. Nach 10, 20, 30, 40, 50, 60, 70 Minuten wurde ein Reaktionsumsatz von 65, 70, 87, 90, 93, 94, 95% ermittelt.

### Beispiel 2

Ca. 500 mg eines mechanisch kurz (≤ 1 h) aktivierten pulverförmigen Kompositmaterials bestehend aus MgH₂ und 2,4 mol-% TiCl₃ wurden in 75 mL entionisiertem Wasser in einer Vorrichtung zur hydrolytischen Wasserstofferzeugung hydrolysiert. Nach 10, 20, 30, 40, 50, 60, 70 Minuten wurde ein Reaktionsumsatz von 45, 64, 74, 80, 83, 85, 86% gemessen.

### Beispiel 3

Ca. 500 mg eines mechanisch kurz (≤ 1 h) aktivierten pulverförmigen Kompositmaterials bestehend aus MgH₂ und 2,4 mol-% FeCl₃ wurden in 75 mL entionisiertem Wasser in einer Vorrichtung zur hydrolytischen Wasserstofferzeugung hydrolysiert. Nach 10, 20, 30, 40, 50, 60, 70 Minuten wurde ein Reaktionsumsatz von 43, 63, 72, 76, 79, 82, 83% gemessen.

### Beispiel 4

Ca. 500 mg eines mechanisch kurz (≤ 1 h) aktivierten pulverförmigen Kompositmaterials bestehend aus MgH₂ und 2,4 mol-% ZnCl₂ wurden in 75 mL entionisiertem Wasser in einer Vorrichtung zur hydrolytischen Wasserstofferzeugung hydrolysiert. Nach 10, 20, 30, 40, 50, 60, 70 Minuten wurde ein Reaktionsumsatz von 24, 38, 47, 52, 55, 56, 56% gemessen.

### Beispiel 5

Ca. 500 mg eines mechanisch kurz (≤ 1 h) aktivierten pulverförmigen Kompositmaterials bestehend aus MgH₂ und 2,4 mol-% MgCl₂ wurden bei unterschiedlichen Pressdrücken (150 und 750 MPa) zu Tabletten verdichtet und diese in 75 mL entionisiertem Wasser in einer Vorrichtung zur hydrolytischen Wasserstofferzeugung hydrolysiert. Nach 10, 20, 30, 40, 50, 60, 70 Minuten wurde bei beiden Tabletten und auch bei dem zu Referenzwecken hergestellten pulverförmigen Kompositmaterial ein Reaktionsumsatz von 47(±2), 64(±2), 73(±2), 79(±2), 83(±2), 85(±2), 87(±2)% ermittelt.

### Beispiel 6

Jeweils ca. 500 mg eines mechanisch kurz (≤ 1 h) aktivierten pulverförmigen Kompositmaterials bestehend aus MgH₂ und 2,4 mol-% MgCl₂ wurden in je 75 mL entionisiertem Wasser sowie in lokal verfügbarem Leitungswasser in einer Vorrichtung zur hydrolytischen Wasserstofferzeugung hydrolysiert. Der Gesamtumsatz beider Hydrolysereaktionen nach 70 Minuten betrug 87% (entionisiertes Wasser) bzw. 75% (Leitungswasser). Durch verschiedene analytische Verfahren wurde die Carbonathärte im Wasser als bestimmend für die Änderung des Gesamtumsatzes ermittelt.

### Beispiel 7

Jeweils ca. 2 g mechanisch kurz (≤ 1 h) aktivierter Kompositmaterialien bestehend aus MgH₂ und verschiedenen Additiven wurden in vorgetrockneten PVA-Folien eingeschweißt (unter Argon und unter Vakuum). Eine sichtbare Hydrolyse des Metallhydrids oder eines der Additive (Aufblähung der Folie) wurde auch nach einer Lagerdauer von mehr als einem Monat (an trockener Luft) nicht beobachtet. Anschließend durchgeführte Hydrolysen in einer Vorrichtung zur hydrolytischen Wasserstofferzeugung ergab eine Anfangsverzögerung der Reaktionen von mindestens 15 Sekunden.

### Beispiel 8

Eine Vorrichtung zur hydrolytischen Wasserstofferzeugung bestehend aus einem gasdichten Reaktionsraum, einer Wasserstoffableitung mit integriertem Sintermetallfilter, einem wassergekühlten Dampfkondensator, einer Wasserzufuhr sowie einer Kompositmaterialzufuhr mit 13 g einer mechanisch kurz (≤ 1 h) aktivierten pastösen Mischung aus 4 g trockenem 1,2,3-Propantrioltriacetat sowie 9 g MgH₂ mit 2,4 mol-% MgCl₂ wurde zunächst mit Argon freigespült. Im Anschluss wurden sukzessive 6, 12, 25 und 40 mL entionisiertes Wasser in den Reaktionsraum zudosiert. Am Gasausgang wurden nach der jeweiligen Wasserdosis Gesamtwasserstoffnormvolumina von 3200 mL, 7800 mL, 11600 mL und 13400 mL entsprechend 24 %, 58 %, 86 %, 99 % Gesamtumsatz nach jeweils weniger als 5 Minuten Reaktionsdauer nach Wasserzugabe registriert. Dabei wurde ein sehr gutes Wiederanlaufverhalten (Dauer weniger als 1 Minute) nach den einzelnen Wasserdosierungen festgestellt.

### Beispiel 9

Eine Vorrichtung zur hydrolytischen Wasserstofferzeugung bestehend aus einem gasdichten Reaktionsraum, einer Wasserstoffableitung mit integriertem Sintermetallfilter, einem wassergekühlten Dampfkondensator, einer Wasserzufuhr sowie einer Kompositmaterialzufuhr mit 2 g einer mechanisch kurz (≤ 1 h) aktivierten pastösen Mischung aus 1 g trockenem 1,2,3-Propantrioltriacetat sowie 1 g MgH₂ mit 1,1 mol-% ZrCl₄ wurde zunächst mit Argon freigespült. Im Anschluss wurden 6,2 mL entionisiertes Wasser in den Reaktionsraum zudosiert. Der Gesamtumsatz der Hydrolyse betrug 97 % nach nur 160 Sekunden Reaktionsdauer.

### Beispiel 10

Eine Vorrichtung zur hydrolytischen Wasserstofferzeugung bestehend aus einem gasdichten Reaktionsraum, einer Wasserstoffableitung mit integriertem Sintermetallfilter, einem wassergekühlten Dampfkondensator, einer Wasserzufuhr, einem Wärmetauscher sowie einer Kompositmaterialzufuhr mit 1,5 g einer mechanisch kurz (≤ 1 h) aktivierten, dann bei 150 MPa Pressdruck zu einer Tablette kompaktierten Mischung aus 0,5 g Pentaerythrittetrastearat sowie 1 g MgH₂ mit 1,1 mol-% ZrCl₄ wurde zunächst mit Argon freigespült. Im Anschluss wurden 6,2 mL entionisiertes Wasser der Temperatur 25 °C in den Reaktionsraum zudosiert. Auch nach fast einer Stunde betrug der Gesamtumsatz der Hydrolyse weniger als 2 %. Im Anschluss wurde der gasdichte Reaktionsraum über den Wärmetauscher auf 70 °C aufgeheizt. Unmittelbar nach dem stattfindenden Schmelzen des Pentaerythrittetrastearats fand ein Reaktionsumsatz von 100 % innerhalb von 340 Sekunden statt.

## Patentansprüche

1. Vorrichtung zur hydrolytischen Erzeugung von Wasserstoff, umfassend mindestens einen gasdichten Reaktionsraum, mindestens eine Zufuhr für das Kompositmaterial und/oder mindestens eine Zufuhr für Wasser bzw. ein wasserhaltiges Gemisch sowie mindestens eine Ableitung für den entstehenden Wasserstoff sowie mindestens ein Kompositmaterial, das mindestens ein erdalkalimetallhaltiges Metallhydrid umfasst sowie mindestens ein Additiv, ausgewählt aus der Gruppe bestehend aus wasserlöslichen und/oder unter Säurebildung hydrolysierbaren Metallsalzen, welches eines oder mehrere der Metallkationen Ca²⁺, Mg²⁺, Zn²⁺, Sn²⁺, Fe²⁺, Fe³⁺, Ti³⁺, Ga³⁺, Sc³⁺, Al³⁺, Y³⁺, Ti⁴⁺, Zr⁴⁺, Sn⁴⁺, *RE*³⁺ oder *RE*⁴⁺, enthält, wobei *RE* die Lanthaniden La bis Lu des Periodensystems repräsentieren, wobei das erdalkalimetallhaltiges Metallhydrid MgH₂ ist,
**dadurch gekennzeichnet, dass**
das Kompositmaterial und das für die Hydrolyse verwendete Wasser oder das wasserhaltige Gemisch mittels einer zerstörbaren Barriere voneinander getrennt sind und der Kontakt zwischen Kompositmaterial und dem für die Hydrolyse verwendeten Wasser oder dem wasserhaltigen Gemisch durch irreversible Beschädigung oder Zerstörung der Barriere hergestellt wird.

2. Vorrichtung nach Anspruch 1, **dadurch gekennzeichnet, dass** sich Vorrat sowie Zufuhr des Kompositmaterials und/oder Vorrat sowie Zufuhr des Wassers bzw. wasserhaltigen Gemischs innerhalb des gasdichten Reaktionsraums befinden.

3. Vorrichtung nach einem der vorhergehenden Ansprüche, **dadurch gekennzeichnet, dass** eine Einheit mit Kapillarwirkung umfasst ist, mittels der ein Kontakt zwischen dem Kompositmaterial und dem für die Hydrolyse verwendeten Wasser oder dem wasserhaltigen Gemisch hergestellt werden kann, beispielsweise einen Docht, einen Schwamm oder Fasern.

4. Vorrichtung nach einem der vorhergehenden Ansprüche, **dadurch gekennzeichnet, dass** das Kompositmaterial und/oder das für die Hydrolyse verwendete Wasser oder das wasserhaltige Gemisch
a) in einem zerstörbaren Kompartiment, beispielsweise einer Glasampulle bevorratet ist, und der Kontakt zwischen Kompositmaterial und Wasser oder Wasser enthaltendem Gemisch durch Bruch des Kompartiments erfolgt, oder
b) durch eine Membran voneinander separiert sind, und der Kontakt zwischen Kompositmaterial und Wasser oder Wasser enthaltendem Gemisch durch Zerstörung der Membran, beispielsweise durch Durchstechen, erfolgt.

5. Vorrichtung nach einem der vorhergehenden Ansprüche, **dadurch gekennzeichnet, dass** diese
a) mindestens eine Einspritzdüse für das Kompositmaterial und/oder für Wasser bzw. wasserhaltiges Gemisch umfasst,
b) mindestens ein Kondensations- und/oder Kühlelement für bei der Hydrolysereaktion entstehenden Wasserdampf umfasst, welches beispielsweise zur Rückführung von Wasser in den gasdichten Reaktionsraum dient,
c) mindestens eine Ableitung für die bei der Hydrolysereaktion entstehenden Abfallprodukte aus dem gasdichten Reaktionsraum enthält,
d) eine Einheit enthält, welche die Durchmischung der Reaktanten im gasdichten Reaktionsraum induziert und/oder verbessert, beispielsweise ein Rührwerk oder ein Ultraschallgenerator,
e) mindestens eine Einheit zur Reduktion der Partialdrücke flüchtiger Substanzen und/oder von Wasserdampf und/oder zur Retention von Aerosolen in oder nach der Ableitung für den entstehenden Wasserstoff umfasst, beispielsweise einen Adsorber auf Zeolith- oder Kieselgelbasis, eine wasserstoffpermeable Membran, einen Faser- oder Sinterfilm,
f) eine Einheit zum Verhindern der Rückströmung von Wasser oder Wasserdampf aus dem Reaktionsraum in das Kompositmaterial umfasst, beispielsweise ein Rückschlagventil oder eine Schleuse,
g) diese einen Wärmetauscher umfasst, wodurch beispielsweise über ein Thermofluid Wärme in den Reaktionsraum oder aus dem Reaktionsraum übertragen werden kann, wobei bevorzugt sich das Thermofluid in direktem Kontakt mit dem Kompositmaterial befindet und/oder Bestandteil desselben ist, und/oder
h) eine Einheit zur Erkennung unerwünschter Hydrolyse im Kompositmaterial enthält, beispielsweise einen Feuchtigkeitsindikator im Kompositmaterial und/oder einen Wasserstoffsensor im Vorratsbehälter für das Kompositmaterial.

6. Vorrichtung nach einem der vorhergehenden Ansprüche, **dadurch gekennzeichnet, dass**
a) das darin enthaltene Kompositmaterial in einem separaten gasdichten Behälter vorgehalten wird,
b) das enthaltene Kompositmaterial und/oder Wasser bzw. wasserhaltiges Gemisch in jeweils einem elastischen Behälter, beispielsweise einer Blase aus einem Butyl-, Epichlorohydrin-, Ethylen-, Propylen-, Fluoro-, Chloropren-, Chlor-Sulfat-Polyethylen-, Naturgummi-, Nitril-, Perfluoro-, Polyurethan- und/oder Silikonelastomer vorgehalten oder bereitgestellt wird, und/oder das enthaltene Kompositmaterial durch eine Förderschnecke in den gasdichten Reaktionsraum dosiert wird und/oder dorthin transportiert wird.

7. Vorrichtung nach einem der vorhergehenden Ansprüche, **dadurch gekennzeichnet, dass** das im Kompositmaterial enthaltene mindestens eine Additiv als Metallchlorid, -fluorid, -bromid, -nitrat, -amid, -sulfat, - hydrogensulfat, -acetat, -butyrat, -formiat, -lactat, -malonat, -pyruvat,
- tartrat oder -citrat vorliegt und insbesondere ausgewählt ist aus der Gruppe bestehend aus Zirconium-(IV)-chlorid, Zirconium-(IV)-acetat, Zirconium-(IV)-citrat, Zirconium-(IV)-formiat, Titan-(III)-chlorid, Eisen-(III)-chlorid, Eisen-(III)-acetat, Eisen-(III)-citrat, Eisen-(III)-formiat, Eisen-(II)-chlorid, Zinkchlorid, Zinkacetat, Zinkcitrat, Zinkformiat sowie Mischungen oder Kombinationen hieraus.

8. Vorrichtung nach einem der vorhergehenden Ansprüche, **dadurch gekennzeichnet, dass**
a) die Gesamtmenge des darin enthaltenen mindestens einen Additivs im Kompositmaterial bezogen auf die Gesamtmenge des Metallhydrids ≤ 15 mol-%, bevorzugt ≤ 5 mol-%, weiter bevorzugt ≤ 2,5 mol-% beträgt, und/oder
b) dem erdalkalimetallhaltigen Metallhydrid des Kompositmaterials ein Additiv zur Verbesserung der Hydrierbarkeit, ausgewählt aus der Gruppe bestehend aus RE-Oxiden, TM-Oxiden, RE-Nitriden, *TM-*Nitriden, *RE*-Carbiden, TM-Carbiden, *RE*-Halogeniden, *TM-*Halogeniden, Graphit, Graphen, Kohlenstoffnanoröhrchen, Fullerenen sowie Mischungen und/oder Kombinationen hieraus, wobei *RE* die Lanthaniden La bis Lu des Periodensystems und *TM* die Übergangsmetalle des Periodensystems repräsentieren, zugemischt ist.

9. Vorrichtung nach einem der vorhergehenden Ansprüche, **dadurch gekennzeichnet, dass** das enthaltene Kompositmaterial
a) in einem wasserlöslichen Polymer, insbesondere Polyvinylalkohol, Stärke und/oder Zellulose, eingebettet, verkapselt oder eingeschweißt, oder mit einem solchen Polymer beschichtet oder zusammen verdichtet vorliegt, und/oder
b) in Form eines Granulats oder Pulvers, einer Suspension, einer Paste oder in verdichteter Form, wie beispielsweise Tabletten, Presslingen oder verdichteten Schüttungen vorliegt.

10. Vorrichtung nach einem der vorhergehenden Ansprüche, **dadurch gekennzeichnet, dass**
a) das Kompositmaterial keine Substanzen enthält, die Hydroxidionen und/oder Wasser enthalten oder freisetzen,
b) das Kompositmaterial mindestens einen gegenüber dem Metallhydrid inerten Feststoff enthält, der als Binde- und/oder Sprengmittel fungiert, wie beispielsweise mikrokristalline Cellulose oder Polyvinylpyrrolidon, und/oder
c) das Kompositmaterial darin *in situ* hergestellt und/oder zubereitet und/oder erzeugt wird, beispielsweise durch eine darin enthaltene Einheit, welche die zur Herstellung des Kompositmaterials benötigten Ausgangssubstanzen miteinander vermischt und/oder verdichtet.

11. Verfahren zur Erzeugung von Wasserstoff, bei dem in einer Vorrichtung nach einem der vorhergehenden Ansprüche ein Kompositmaterial mit Wasser oder wasserhaltigen Gemischen kontaktiert und unter Bildung von Wasserstoff hydrolysiert wird, wobei insbesondere das Gemisch aus Kompositmaterial und Wasser oder wasserhaltigem Gemisch während der Hydrolyse temperiert wird, vorzugsweise bei Temperaturen zwischen 10 und 80 °C.

12. Verfahren nach vorhergehendem Anspruch, **dadurch gekennzeichnet, dass**
a) eine Temperierung des Gemisches aus Kompositmaterial und Wasser oder wasserhaltigem Gemisch durch die Abwärme einer Brennstoffzelle und/oder einer Verbrennungskraftmaschine und/oder der Reaktionswärme eines thermochemischen Energiespeichers und/oder einer chemischen Reaktion und/oder elektrisch erzeugter Wärme/Kälte erfolgt, und/oder
b) zur Bestimmung und/oder Steuerung der Hydrolysereaktion eine oder mehrere der folgenden Größen zeitabhängig und/oder zeitunabhängig überwacht und/oder geregelt werden: Druck, Temperatur, Füllstand, Wasserstoffvolumen, pH, elektrische Leitfähigkeit, Rührgeschwindigkeit, zugegebene bzw. zuzugebende Menge des Kompositmaterials und/oder zugegebene bzw. zuzugebende Menge des Wassers bzw. des wasserhaltigen Gemischs.

13. Vorrichtung zur Erzeugung elektrischer Energie, umfassend eine Vorrichtung zur Erzeugung von Wasserstoff nach einem der Ansprüche 1 bis 10 sowie mindestens einen Apparat zur Erzeugung elektrischer Energie aus Wasserstoff, insbesondere mindestens eine Brennstoffzelle oder eine Verbrennungskraftmaschine mit Generator.

14. Verwendung einer Vorrichtung zur Erzeugung von Wasserstoff nach einem der Ansprüche 1 bis 10, einer Vorrichtung zur Erzeugung elektrischer Energie nach Anspruch 13 und/oder eines Verfahrens zur Erzeugung von Wasserstoff nach einem der Ansprüche 11 bis 12 zur Versorgung von Backup- oder Notstromversorgungen, tragbaren elektronischen Geräten, Ladegeräten, Beleuchtung, maritimen Anwendungen, insbesondere Bojen und Signalzeichen, Sensoren und Sonden, autarken Funkstationen, Feldbatterien, Auftriebsgeneratoren und/oder Demonstratoren z.B. für Schulen oder Messen mit elektrischer Energie und/oder Wasserstoff.

## Claims

1. A device for the hydrolytic generation of hydrogen, comprising at least one gas-tight reaction space, at least one feed for the composite material and/or at least one feed for water or a water-containing mixture and at least one discharge for the resulting hydrogen and at least one composite material that comprises at least one alkaline earth metal-containing metal hydride and at least one additive selected from the group consisting of water-soluble and/or hydrolyzable metal salts with formation of acid, which contains one or more of the metal cations Ca²⁺, Mg²⁺, Zn²⁺, Sn²⁺, Fe²⁺, Fe³⁺, Ti³⁺, Ga³⁺, Sc³⁺, Al³⁺, Y³⁺, Ti⁴⁺, Zr⁴⁺, Sn⁴⁺, *RE*³⁺ or *RE*⁴⁺, *RE* representing the lanthanides La to Lu of the periodic table, the alkaline earth metal containing metal hydride being MgH₂,
**characterized in that**
the composite material and the water or the water-containing mixture used for the hydrolysis are separated from one another by means of a destructible barrier and the contact between the composite material and the water or the water-containing mixture used for the hydrolysis is established by irreversible damage or destruction of the barrier.

2. The device according to claim 1, **characterized in that** storage and feed of the composite material and/or storage and feed of the water or water-containing mixture are located within the gas-tight reaction space.

3. The device according to any one of the preceding claims, **characterized in that** a unit having capillary action is comprised, by means of which a contact between the composite material and the water or the water-containing mixture used for the hydrolysis can be established, for example, a wick, a sponge or fibers.

4. The device according to any one of the preceding claims, **characterized in that** the composite material and/or the water or the water-containing mixture used for the hydrolysis
a) is stored in a destructible compartment, for example, a glass ampule, and the contact between the composite material and the water or water-containing mixture takes place by rupture of the compartment, or
b) are separated from one another by a membrane, and the contact between composite material and water or water-containing mixture takes place by destroying the membrane, for example, by piercing.

5. The device according to any one of the preceding claims, **characterized in that** it
a) comprises at least one injection nozzle for the composite material and/or for water or water-containing mixture,
b) comprises at least one condensation and/or cooling element for the water vapor produced in the hydrolysis reaction, which is used, for example, to return water to the gas-tight reaction space,
c) contains at least one discharge for the waste products arising from the hydrolysis reaction from the gas-tight reaction space,
d) contains a unit inducing and/or improving the mixing of the reactants in the gas-tight reaction space, for example, a stirrer or an ultrasonic generator,
e) comprises at least one unit for reducing the partial pressures of volatile substances and/or of water vapor and/or for retaining aerosols in or after the discharge for the resulting hydrogen, for example, an adsorber based on zeolite or silica gel, a hydrogen-permeable membrane, a fiber or sintered film,
f) comprises a unit for preventing the backflow of water or water vapor from the reaction space into the composite material, for example, a check valve or a sluice,
g) it comprises a heat exchanger, whereby, for example, heat can be transferred into the reaction space or out of the reaction space via a thermal fluid, wherein the thermal fluid is preferably in direct contact with the composite material and/or is part of the same, and/or
h) contains a unit for detecting undesired hydrolysis in the composite material, for example, a moisture indicator in the composite material and/or a hydrogen sensor in the storage container for the composite material.

6. The device according to any one of the preceding claims, **characterized in that**
a) the composite material contained therein is kept in a separate gas-tight container,
b) the composite material contained and/or water or water-containing mixture is held or provided in each case in an elastic container, for example, a bladder made of a butyl, epichlorohydrin, ethylene, propylene, fluorine, chloroprene, chlorosulfate-polyethylene, natural rubber, nitrile, perfluoro, polyurethane and/or silicone elastomer, and/or the composite material contained is dosed into the gas-tight reaction space by a conveyor screw and/or is transported there.

7. The device according to any one of the preceding claims, **characterized in that** the at least one additive contained in the composite material is present as a metal chloride, fluoride, bromide, nitrate, amide, sulfate, hydrogen sulfate, acetate, butyrate, formate, lactate, malonate, pyruvate, tartrate or citrate and in particular is selected from the group consisting of zirconium(IV) chloride, zirconium(IV) acetate, zirconium(IV) citrate, zirconium(IV) formate, titanium(III) chloride, iron(III) chloride, iron(III) acetate, iron(III) citrate, iron(III) formate, iron(II) chloride, zinc chloride, zinc acetate, zinc citrate, zinc formate and mixtures or combinations thereof.

8. The device according to any one of the preceding claims, **characterized in that**
a) the total amount of the at least one additive contained therein in the composite material based on the total amount of the metal hydride is ≤ 15 mol%, preferably ≤ 5 mol%, more preferably ≤ 2.5 mol%, and/or
b) the alkaline earth metal-containing metal hydride of the composite material is admixed with an additive for improving the hydro-genability, selected from the group consisting of *RE* oxides, *TM* oxides, *RE* nitrides, *TM* nitrides, *RE* carbides, *TM* carbides, RE halides, *TM* halides, graphite, graphene, carbon nanotubes, fullerenes and mixtures and/or combinations thereof, wherein *RE* represents the lanthanides La to Lu of the periodic table and *TM* represents the transition metals of the periodic table.

9. The device according to any one of the preceding claims, **characterized in that** the contained composite material
a) is present embedded, encapsulated or welded in a water-soluble polymer, in particular polyvinyl alcohol, starch and/or cellulose, or coated with such a polymer or compressed together, and/or
b) is present in the form of granules or powder, a suspension, a paste or in compacted form, such as tablets, pellets or packed beds.

10. The device according to any one of the preceding claims, **characterized in that**
a) the composite material does not contain any substances containing or releasing hydroxide ions and/or water,
b) the composite material contains at least one solid which is inert towards the metal hydride and which functions as a binding and/or disintegrating agent, such as, for example, microcrystalline cellulose or polyvinylpyrrolidone, and/or
c) the composite material is produced and/or prepared and/or generated therein *in situ,* for example, by a unit contained therein which mixes and/or compresses the starting substances required for the production of the composite material with one another.

11. A method for generating hydrogen, in which, in a device according to any one of the preceding claims, a composite material is contacted with water or water-containing mixtures and hydrolyzed to form hydrogen, wherein in particular the mixture of composite material and water or water-containing mixture is temperature controlled during the hydrolysis, preferably at temperatures between 10 and 80°C.

12. The method according to the preceding claim, **characterized in that**
a) the mixture of composite material and water or water-containing mixture is temperature controlled through the waste heat of a fuel cell and/or an internal combustion engine and/or the heat of reaction of a thermochemical energy store and/or a chemical reaction and/or electrically generated heat/cold, and/or
b) for determining and/or controlling the hydrolysis reaction, one or more of the following variables can be monitored and/or regulated in a time-dependent and/or time-independent manner: pressure, temperature, fill level, hydrogen volume, pH, electrical conductivity, stirring speed, amount of the composite material added or to be added and/or amount of the water or the water-containing mixture added or to be added.

13. A device for generating electrical energy, comprising a device for generating hydrogen according to any one of claims 1 to 10 and at least one apparatus for generating electrical energy from hydrogen, in particular at least one fuel cell or an internal combustion engine having a generator.

14. A use of a device for generating hydrogen according to any one of claims 1 to 10, a device for generating electrical energy according to claim 13 and/or a method for generating hydrogen according to any one of claims 11 to 12 for supplying backup or emergency power supplies, portable electronic devices, chargers, lighting, maritime applications, in particular buoys and signal signs, sensors and probes, self-sufficient radio stations, field batteries, buoyancy generators and/or demonstrators, for example, for schools or trade fairs with electrical energy and/or hydrogen.

## Revendications

1. Dispositif de production hydrolytique d'hydrogène, comprenant au moins une enceinte de réaction étanche aux gaz, au moins une alimentation en matériau composite et/ou au moins une alimentation pour l'eau ou le mélange d'eau et d'hydrogène, ou un mélange contenant de l'eau, ainsi qu'au moins une évacuation pour l'hydrogène produit et au moins un matériau composite contenant au moins un hydrure métallique renfermant un métal alcalino-terreux, ainsi qu'au moins un additif sélectionné dans le groupe constitué par les sels métalliques solubles dans l'eau et/ou hydrolysables avec formation d'acide, contenant un ou plusieurs des cations métalliques Ca²⁺, Mg²⁺, Zn²⁺, Sn²⁺, Fe²⁺, Fe³⁺, Ti³⁺, Ga³⁺, Sc³⁺, Al³⁺, Y³⁺, Ti⁴⁺, Zr⁴⁺, Sn⁴⁺, *RE*³⁺ ou *RE*⁴⁺, où représente les lanthanides La à Lu du système périodique, l'hydrure métallique contenant un métal alcalino-terreux étant le MgH₂,
caractérisé de telle sorte que
le matériau composite et l'eau ou le mélange contenant de l'eau qui est employé(e) pour l'hydrolyse sont séparés l'un de l'autre au moyen d'une barrière destructible, tandis que le contact entre le matériau composite et l'eau ou le mélange contenant de l'eau employé(e) pour l'hydrolyse est établi par endommagement ou destruction irréversible de la barrière.

2. Dispositif conforme à la revendication 1, caractérisé de telle sorte que la réserve et l'alimentation du matériau composite et/ou la réserve et l'alimentation de l'eau ou du mélange contenant de l'eau se trouvent à l'intérieur de l'enceinte de réaction étanche aux gaz.

3. Dispositif conforme à l'une des revendications précédentes, caractérisé de telle sorte qu'il comprenne une unité à action capillaire au moyen de laquelle un contact peut être établi entre le matériau composite et l'eau ou le mélange contenant de l'eau employé(e) pour l'hydrolyse, par exemple une mèche, une éponge ou des fibres.

4. Dispositif conforme à l'une des revendications précédentes, caractérisé de telle sorte que le matériau composite et/ou l'eau ou le mélange contenant de l'eau employé(e) pour l'hydrolyse
a) soient conservés dans un compartiment destructible, tel qu'une ampoule en verre, et de sorte que le contact entre le matériau composite et l'eau ou le mélange contenant de l'eau s'effectue par rupture du compartiment, ou
b) soient maintenus séparés par une membrane, et de sorte que le contact entre le matériau composite et l'eau ou le mélange contenant de l'eau s'effectue par destruction de la membrane, par exemple par perforation.

5. Dispositif conforme à l'une des revendications précédentes, caractérisé de manière à
a) inclure au moins une buse d'injection pour le matériau composite et/ou pour l'eau ou le mélange contenant de l'eau,
b) inclure au moins un élément de condensation et/ou de refroidissement pour la vapeur d'eau produite lors de la réaction d'hydrolyse, par exemple pour les besoins du recyclage de l'eau dans la chambre de réaction étanche aux gaz,
c) contenir au moins une dérivation pour les déchets produits lors de la réaction d'hydrolyse à partir de la chambre de réaction étanche aux gaz,
d) contenir une unité qui induit et/ou améliore le mélange des réactifs dans la chambre de réaction étanche aux gaz, par exemple un agitateur ou un générateur d'ultrasons,
e) contenir au moins une unité destinée à la réduction des pressions partielles des substances volatiles et/ou de la vapeur d'eau et/ou à la rétention des aérosols dans, ou au niveau de l'évacuation de l'hydrogène produit, par exemple un adsorbant à base de zéolithe ou de gel de silice, une membrane perméable à l'hydrogène, un film de fibres ou un film fritté,
f) contenir une unité destinée à empêcher le reflux d'eau ou de vapeur d'eau émis depuis la chambre de réaction dans le matériau composite, par exemple un clapet anti-retour ou une écluse,
g) comprendre un échangeur de chaleur, grâce auquel, par exemple, de la chaleur peut être transférée dans l'espace de réaction ou hors de l'espace de réaction par le biais d'un thermofluide, ce dernier se trouvant de préférence en contact direct avec le matériau composite et/ou faisant partie de celui-ci, et/ou
h) comprendre une unité de détection de l'hydrolyse indésirable dans le matériau composite, par exemple un indicateur d'humidité dans le matériau composite et/ou un capteur d'hydrogène dans le réservoir de stockage du matériau composite.

6. Dispositif conforme à l'une des revendications précédentes, caractérisé de telle sorte que
a) le matériau composite qu'il contient soit conservé dans un récipient distinct étanche aux gaz,
b) le matériau composite contenu et/ou l'eau ou le mélange contenant de l'eau soit maintenu ou mis à disposition dans un récipient élastique prévu à cet effet, par exemple une poche en élastomère de butyle, d'épichlorohydrine, d'éthylène, de propylène, de fluoroélastomère, de chloroprène, de chlorosulfate-polyéthylène, de caoutchouc naturel, de nitrile, de perfluoroélastomère, de polyuréthane et/ou de silicone, et/ou que le matériau composite contenu soit dosé par une vis sans fin dans la chambre de réaction étanche aux gaz et/ou y soit transporté.

7. Dispositif conforme à l'une des revendications précédentes, caractérisé de telle sorte qu'au moins un additif contenu dans le matériau composite se présente sous forme de chlorure, fluorure, bromure, nitrate, amide, sulfate, hydrogénosulfate, acétate, butyrate, formiate, lactate, malonate, pyruvate, tartrate ou citrate métallique, et soit notamment sélectionné dans le groupe constitué par le chlorure de zirconium (IV), l'acétate de zirconium (IV), le citrate de zirconium (IV), le formiate de zirconium (IV), le chlorure de titane (III), le chlorure de fer (III), l'acétate de fer (III), le citrate de fer (III), le formiate de fer (III), le chlorure de fer (II), le chlorure de zinc, l'acétate de zinc, le citrate de zinc, le formiate de zinc, ainsi que des mélanges ou des combinaisons de ces composants.

8. Dispositif conforme à l'une des revendications précédentes, caractérisé de telle sorte que
a) la quantité totale d'au moins un additif contenu dans le matériau composite par rapport à la quantité totale de l'hydrure métallique soit ≤ 15 % en moles, de préférence ≤ 5 % en moles, et plus préférablement ≤ 2,5 % en moles, et/ou que
b) l'hydrure métallique contenant un métal alcalino-terreux du matériau composite soit mélangé à un additif destiné à améliorer l'hydrogénabilité, choisi dans le groupe constitué des oxydes *RE*, des oxydes *TM,* des nitrures *RE,* des nitrures *TM,* des carbures *RE*, des carbures *TM,* des halogénures *RE*, des halogénures *TM,* du graphite, du graphène, des nanotubes de carbone, des fullerènes, ainsi que des mélanges et/ou combinaisons de ceux-ci, *RE* représentant les lanthanides La à Lu du tableau périodique et *TM* représentant les métaux de transition du tableau périodique.

9. Dispositif conforme à l'une des revendications précédentes, caractérisé de telle sorte que le matériau composite contenu
a) soit incorporé, encapsulé ou soudé dans un polymère soluble dans l'eau, notamment de l'alcool polyvinylique, de l'amidon et/ou de la cellulose, ou soit revêtu d'un tel polymère ou est compacté ensemble, et/ou que
b) ce matériau se présente sous forme de granulés ou de poudre, d'une suspension, d'une pâte, ou sous une forme compactée, telle que des comprimés, granulés compactés ou produits en vrac compactés.

10. Dispositif conforme à l'une des revendications précédentes, caractérisé de telle sorte que
a) le matériau composite ne contienne pas de substances qui referment ou libèrent des ions hydroxyde et/ou de l'eau,
b) le matériau composite contienne au moins un solide inerte vis-à-vis de l'hydrure métallique, jouant le rôle de liant et/ou d'agent de désintégration, par exemple de la cellulose microcristalline ou de la polyvinylpyrrolidone, et/ou que
c) le matériau composite soit fabriqué et/ou élaboré et/ou produit in *situ,* par exemple par une unité qui y est contenue et qui mélange et/ou comprime les substances de départ nécessaires à la fabrication du matériau composite.

11. Procédé de génération d'hydrogène dans lequel, dans un dispositif conforme à l'une des revendications précédentes, un matériau composite est mis en contact avec de l'eau ou des mélanges contenant de l'eau, et est hydrolysé avec formation d'hydrogène, dans lequel notamment le mélange de matériau composite et d'eau ou de mélange contenant de l'eau est tempéré durant l'hydrolyse, de préférence à des températures comprises entre 10 et 80 °C.

12. Procédé conforme à la revendication précédente, caractérisé de telle sorte que
a) une mise en température du mélange de matériau composite et d'eau ou de mélange contenant de l'eau soit effectuée par la chaleur perdue provenant d'une pile à combustible et/ou d'un moteur à combustion interne et/ou de la chaleur de réaction d'un accumulateur d'énergie thermochimique et/ou d'une réaction chimique et/ou de la chaleur/du froid générés électriquement, et/ou que
b) pour déterminer et/ou commander la réaction d'hydrolyse, une ou plusieurs des grandeurs suivantes soient surveillées et/ou réglées en fonction du temps et/ou indépendamment du temps : pression, température, niveau de remplissage, volume d'hydrogène, pH, conductivité électrique, vitesse d'agitation, quantité de matériau composite ajoutée ou à ajouter et/ou quantité d'eau ou de mélange contenant de l'eau ajoutée ou à ajouter.

13. Dispositif de production d'énergie électrique comprenant un dispositif de production d'hydrogène conforme à l'une des revendications 1 à 10, ainsi qu'au moins un appareil de production d'énergie électrique à partir d'hydrogène, notamment au moins une pile à combustible ou un moteur à combustion interne avec générateur.

14. Utilisation d'un dispositif de production d'hydrogène conforme à l'une des revendications 1 à 10, d'un dispositif de production d'énergie électrique conforme à la revendication 13 et/ou d'un procédé de production d'hydrogène conforme à l'une des revendications 11 à 12 pour l'alimentation en énergie électrique et/ou en hydrogène de blocs d'alimentation de secours ou d'urgence, d'appareils électroniques portables, de chargeurs, de dispositifs d'éclairage, d'applications maritimes, en particulier de bouées et de signaux, de capteurs et de sondes, de stations radio autonomes, de batteries de terrain, de générateurs de flottaison et/ou de démonstrateurs, par exemple pour des établissements scolaires ou des salons.
